(19) Europäisches Patentamt
European Patent Office
Office européen des brevets

(11) EP 4 753 007 A1

(12) **EUROPEAN PATENT APPLICATION**
published in accordance with Art. 153(4) EPC

(43) Date of publication:
**03.06.2026 Bulletin 2026/23**

(21) Application number: **24859711.4**

(22) Date of filing: **26.08.2024**

(51) International Patent Classification (IPC):
***H01M 10/0567*** $^{(2010.01)}$ ***H01M 10/052*** $^{(2010.01)}$
***H01M 10/054*** $^{(2010.01)}$ ***H01M 10/0568*** $^{(2010.01)}$
***H01M 10/0569*** $^{(2010.01)}$

(52) Cooperative Patent Classification (CPC):
**H01M 10/052; H01M 10/054; H01M 10/0567; H01M 10/0568; H01M 10/0569;** Y02E 60/10

(86) International application number:
**PCT/JP2024/030303**

(87) International publication number:
**WO 2025/047678 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.08.2023 JP 2023140511**
**28.02.2024 JP 2024028755**

(71) Applicant: **Central Glass Company, Limited**
**Ube-shi, Yamaguchi 755-0001 (JP)**

(72) Inventors:
- **MORI, Katsumasa**
**Tokyo 101-0054 (JP)**
- **KAWABATA, Wataru**
**Tokyo 101-0054 (JP)**
- **IWASAKI, Susumu**
**Tokyo 101-0054 (JP)**
- **TAKAHASHI, Mikihiro**
**Tokyo 101-0054 (JP)**
- **MASUCHI, Ryusei**
**Tokyo 101-0054 (JP)**
- **KUBO, Kenji**
**Tokyo 101-0054 (JP)**
- **MORINAKA, Takayoshi**
**Tokyo 101-0054 (JP)**

(74) Representative: **Manitz Finsterwald**
**Patent- und Rechtsanwaltspartnerschaft mbB**
**Martin-Greif-Straße 1**
**80336 München (DE)**

(54) **NON-AQUEOUS ELECTROLYTE AND NON-AQUEOUS ELECTROLYTE BATTERY**

(57) The present disclosure provides a nonaqueous electrolyte solution which contains (I) a solute, (II) a nonaqueous organic solvent, (III) a compound represented by the general formula (1) described in the specification, (IV) a compound represented by the general formula (4) described in the specification, and (V) at least one compound selected from the group consisting of a nitrate salt, a compound represented by the general formula (2) described in the specification, and a compound represented by the general formula (3) described in the specification and in which (V)/{(III)+(IV)}, which is the mass ratio of the amount of the (V) to the total amount of the (III) and the (IV), is 0.0040 or more.

EP 4 753 007 A1

## Description

### TECHNICAL FIELD

The present disclosure relates to a nonaqueous electrolyte solution and a nonaqueous electrolyte solution battery.

### BACKGROUND ART

**In** recent years, demand has been rapidly increasing for batteries having high capacity, high power output, and high energy density, for use not only in power storage systems for compact, high-energy-density applications such as information and communication devices including personal computers, video cameras, digital cameras, mobile phones, and smartphones but also as auxiliary power sources mountable on electric vehicles, hybrid vehicles, and fuel-cell vehicles. In addition, there is an increasing demand for batteries capable of long-term use also in large-scale and high-power storage systems, such as electric power storage systems. Nonaqueous electrolyte solution batteries such as lithium ion batteries, lithium batteries, and lithium ion capacitors have been actively developed as candidates for these various power storage systems.

A lithium secondary battery mainly includes a positive electrode, a nonaqueous electrolyte solution, and a negative electrode. Examples of negative electrodes for lithium secondary batteries include metallic lithium, metal-based materials capable of storing and releasing lithium (e.g., metal elements, oxides, and lithium alloys), and carbon materials. In particular, lithium secondary batteries using carbon materials such as coke, artificial graphite, and natural graphite have been widely commercialized. For example, it has been reported that, in lithium secondary batteries using a highly crystallized carbon material such as natural graphite or artificial graphite as a negative electrode material, a nonaqueous organic solvent in the nonaqueous electrolyte solution is reductively decomposed on the negative electrode surface during charging, and the resulting decomposition products and gases inhibit the intrinsic electrochemical reactions of the battery, thereby deteriorating cycle characteristics.

In addition, it is known that reductive decomposition of the nonaqueous organic solvent is caused more easily in a lithium secondary battery using lithium metal, an alloy thereof, a simple metal element of silicon, tin, or the like, an oxide thereof, or the like as a negative electrode material than in a negative electrode of a carbon material because pulverization of the negative electrode material proceeds during the cycles although the initial capacity is high, resulting in a decrease in the charge/discharge efficiency in the first cycle due to an increase in the initial irreversible capacity of the battery and a considerable decrease in the battery performance such as the battery capacity and the cycle characteristic associated therewith.

When lithium cations are intercalated into the negative electrode during the first cycle charging, the negative electrode and the lithium cations or the negative electrode and the electrolyte solution solvent react with each other to form a film containing lithium oxide, lithium carbonate, or lithium alkyl carbonate as a main component on the surface of the negative electrode. The film on the surface of the electrode is called solid electrolyte interface (SEI), and the properties thereof greatly affect the battery performance, through suppression of reductive decomposition of the solvent, suppression of deterioration of the battery performance, or the like.

As described above, lithium cannot be smoothly stored in and released from the negative electrode due to, for example, accumulation of decomposition products of the nonaqueous organic solvent, gas generation, and adverse effects such as pulverization of the negative electrode material. As a result, battery characteristics such as cycle characteristics significantly deteriorate.

As the positive electrode, for example, $LiCoO_2$, $LiMn_2O_4$, $LiNiO_2$, and $LiFePO_4$ are known. It has been reported that, in lithium secondary batteries using such positive electrode materials, when the battery is exposed to high temperatures in a charged state, a nonaqueous organic solvent in the nonaqueous electrolyte solution locally undergoes oxidative decomposition at the interface between the positive electrode material and the nonaqueous electrolyte solution, and the resulting decomposition products and gases inhibit the intrinsic electrochemical reactions of the battery, thereby deteriorating battery performance such as cycle characteristics. Similar to the negative electrode, it is known that a film made of oxidative decomposition products is also formed on the surface of the positive electrode, and the film also plays an important role such as suppressing oxidative decomposition of the solvent and suppressing the amount of gas generated.

As described above, typical lithium secondary batteries have causes that degrade battery performance, such as inhibition of lithium-ion transport and swelling of the battery, due to decomposition products and gases generated when the nonaqueous electrolyte solution decomposes on the positive electrode and/or the negative electrode.

In addition to overcoming these problems, in order to improve the battery performance including long-term durability and output characteristic, it is important to form a SEI which has high ion conductivity and low electron conductivity and which is stable over a long period of time, and attempts have been widely made to actively form an excellent SEI by adding a small amount (usually 0.01% by mass or more and 10% by mass or less) of a compound referred

to as an additive to the nonaqueous electrolyte solution.

For example, Patent Literature 1 discloses that the high-temperature cycle characteristics are improved and deterioration of the high-temperature storage characteristics is suppressed by combining a specific sulfonylimide salt or a phosphoryl imide salt and an oxalato complex.

Moreover, Patent Literature 2 discloses that, by adding a specific fluorine-containing imide salt to an electrolyte solution, the effect of suppressing an increase in the internal resistance at low temperature and the effect of suppressing gas generation at high temperature are expressed in a well-balanced manner.

In addition, Patent Literature 3 discloses that by combining a fluorine-containing cyclic carbonate with lithium nitrate, a durable SEI is formed on a Si-based negative electrode, thereby improving cycle performance.

Further, Patent Literature 4 discloses that when a phosphite ester compound is contained in a nonaqueous electrolyte solution in an amount of 0.0005 to 2% of the weight of the nonaqueous electrolyte solution, the HF content of the nonaqueous electrolyte solution after storage at 50°C is lowered, and the hue is stabilized.

Patent Literature 5 discloses that by adding a carbodiimide compound to a nonaqueous electrolyte solution, moisture introduced from the nonaqueous electrolyte solution and/or battery components is trapped, thereby suppressing generation of hydrogen fluoride, which causes battery deterioration.

## CITATION LIST

### PATENT LITERATURE

Patent Literature 1: JP2013-051122A
Patent Literature 2: WO2017/111143
Patent Literature 3: JP2016-523429A
Patent Literature 4: CN1601799A
Patent Literature 5: JPH10-294129A

## SUMMARY OF INVENTION

### TECHNICAL PROBLEM

However, the studies by the present inventors have revealed that when a nonaqueous electrolyte solution containing a phosphoryl imide salt and an oxalato complex such as those described in Patent Literatures 1 and 2 is used, the battery performance (suppression of an increase in the internal resistance, the high-temperature cycle characteristic, and gas suppression) is certainly improved, but a problem sometimes arises because the electrolyte solution may be colored when the nonaqueous electrolyte solution is stored in an environment at room temperature (25°C).

In addition, there is no case reporting that the lithium nitrate described in Patent Literature 3 has an effect of improving the stability of the electrolyte solution.

In addition, it has been found that the problem of coloration described above cannot be solved by simply adding the phosphite ester compound described in Patent Literature 4 in the concentration range described in Patent Literature 4.

Further, although the carbodiimide compound described in Patent Literature 5 improves the stability of the electrolyte solution, there is no case in which the carbodiimide compound is used in combination with a nonaqueous electrolyte solution containing a phosphoryl imide salt and an oxalato complex.

An object of the present invention is to provide a nonaqueous electrolyte solution capable of exhibiting excellent battery performance when used for a nonaqueous electrolyte solution battery and capable of suppressing coloration when stored for a long period of time at room temperature (25°C) and to provide a nonaqueous electrolyte solution battery using the nonaqueous electrolyte solution.

### SOLUTION TO PROBLEM

As a result of intensive studies to solve such problems, the present disclosers have found that the above problems can be solved by blending at least one compound selected from the group consisting of a nitrate salt, a specific phosphorus-containing compound such as a phosphite ester compound, and a carbodiimide compound in a specific ratio in a nonaqueous electrolyte solution containing a solute, a nonaqueous organic solvent, a specific phosphoryl imide salt, and a specific boron-based, phosphorus-based or silicon-based complex such as an oxalato complex. Specifically, the above problems can be solved by the following configuration.

[1] A nonaqueous electrolyte solution, containing:

(I) a solute;
(II) a nonaqueous organic solvent;
(III) a compound represented by the following general formula (1);
(IV) a compound represented by the following general formula (4); and
(V) at least one compound selected from the group consisting of a nitrate salt, a compound represented by the following general formula (2), and a compound represented by the following general formula (3);

in which (V)/{(III)+(IV)}, which is a mass ratio of an amount of the (V) to a total amount of the (III) and the (IV), is 0.0040 or more.

[Chem. 1]

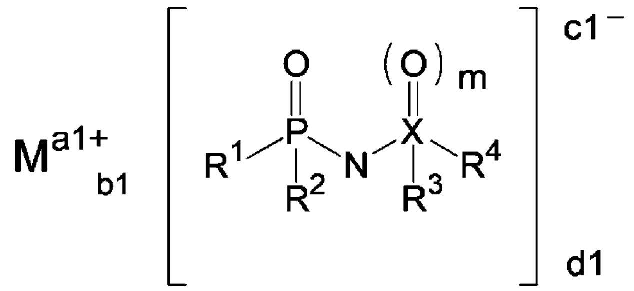

(1)

[In the general formula (1), $M^{a1+}$ is an alkali metal cation, an alkaline earth metal cation, or an onium cation, and a1 represents an integer equal to a valence of a corresponding cation. a1 to d1 each represent an integer of 1 or 2 and satisfy $a1 \times b1 = c1 \times d1$. X is a sulfur atom or a phosphorus atom. When X is a sulfur atom, m is 2, and $R^4$ does not exist, and when X is a phosphorus atom, m is 1. $R^1$ to $R^4$ are each independently a fluorine atom, an oxygen atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and the organic group may contain a fluorine atom, an oxygen atom, and/or an unsaturated bond.]

[Chem. 2]

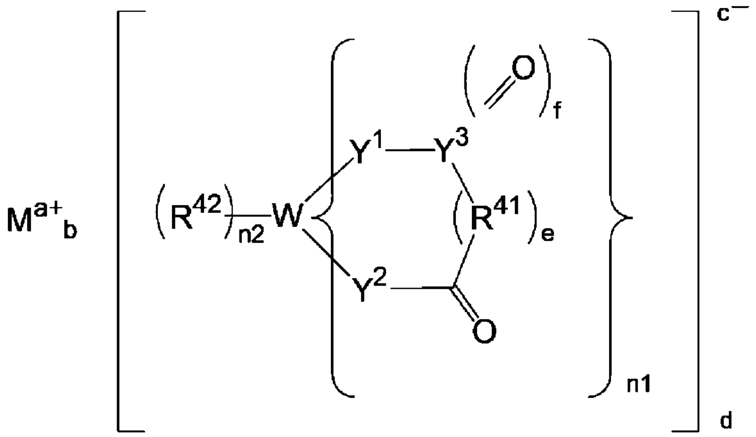

(4)

[In the general formula (4), W represents a boron atom, a phosphorus atom, or a silicon atom. n1 is 1 or 2, and n2 is 2 or 4. e is 0 or 1. When e is 0, $R^{41}$ does not exist, and $Y^3$ and the carbonyl group described on the adjacent sides of $R^{41}$ are directly bonded. $R^{41}$ represents an alkylene group having 1 to 10 carbon atoms, a halogenated alkylene group having 1 to 10 carbon atoms, an alkenylene group having 2 to 10 carbon atoms, a halogenated alkenylene group having 2 to 10 carbon atoms, an arylene group having 6 to 20 carbon atoms, or a halogenated arylene group having 6 to 20 carbon atoms (the groups may contain a heteroatom in the structures thereof, and when n1 is 2 or

more, n1 $R^{41}$'s may be bonded to each other), and $R^{42}$ represents a halogen atom. $Y^1$ and $Y^2$ each independently represent an oxygen atom or a sulfur atom, and $Y^3$ represents a carbon atom or a sulfur atom. f is 1 when $Y^3$ is a carbon atom, and f is 1 or 2 when $Y^3$ is a sulfur atom. $M^{a+}$ represents an alkali metal cation, an alkaline earth metal cation, or an onium cation, and a represents a valence of a corresponding cation. a to d are 1 or 2 and satisfy $a \times b = c \times d$.]

[Chem. 3]

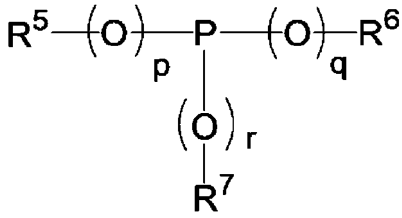

(2)

[In the general formula (2), p, q, and r each independently represent 0 or 1. $R^5$ to $R^7$ are each independently a fluorine atom or a hydrocarbon group having 1 to 20 carbon atoms which may be partially or entirely substituted with fluorine, and $R^5$ and $R^6$, $R^5$ and $R^7$, or $R^6$ and $R^7$ may be bonded to each other to form a ring structure.]

[Chem. 4]

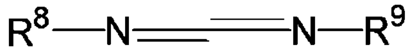

(3)

[In the general formula (3), $R^8$ and $R^9$ are each independently a hydrocarbon group having 1 to 20 carbon atoms.]

[2] The nonaqueous electrolyte solution according to [1], in which the (V)/{(III)+(IV)} is 0.0100 to 1.5000.
[3] The nonaqueous electrolyte solution according to [1] or [2], in which at least one of $R^1$ to $R^4$ in the general formula (1) is a fluorine atom.
[4] The nonaqueous electrolyte solution according to any one of [1] to [3], in which the compound represented by the general formula (1) is a bis(difluorophosphoryl)imide salt or a (fluorosulfonyl)(difluorophosphoryl)imide salt.
[5] The nonaqueous electrolyte solution according to any one of [1] to [4], in which the compound represented by the general formula (4) is an oxalato salt compound.
[6] The nonaqueous electrolyte solution according to any one of [1] to [5], in which q, r, and s in the general formula (2) are all 1, and all of $R^5$ to $R^7$ are the same hydrocarbon group having 1 to 20 carbon atoms which may be partially or entirely substituted with fluorine.
[7] The nonaqueous electrolyte solution according to any one of [1] to [6], in which the atoms bonded to the nitrogen atoms as $R^8$ and $R^9$ in the general formula (3) are secondary carbon atoms.
[8] The nonaqueous electrolyte solution according to any one of [1] to [7], in which the compound represented by the general formula (3) is at least one selected from the group consisting of N,N'-diisopropylcarbodiimide and N,N'-dicyclohexylcarbodiimide.
[9] The nonaqueous electrolyte solution according to any one of [1] to [8], in which the (V) contains the nitrate salt, and a content of the nitrate salt with respect to a total amount of the nonaqueous electrolyte solution is 1% by mass or less.
[10] The nonaqueous electrolyte solution according to any one of [1] to [9], in which the nonaqueous electrolyte solution contains fluoroethylene carbonate.
[11] The nonaqueous electrolyte solution according to any one of [1] to [10], in which the (I) is at least one selected from the group consisting of $LiPF_6$, $LiBF_4$, $LiSbF_6$, $LiAsF_6$, $LiClO_4$, $LiN(FSO_2)_2$, $LiAlO_2$, $LiAlCl_4$, LiCl, and LiI.
[12] The nonaqueous electrolyte solution according to any one of [1] to [10], in which the (I) is at least one selected from the group consisting of $NaPF_6$, $NaBF_4$, $NaSbF_6$, $NaAsF_6$, $NaClO_a$, $NaN(FSO_2)_2$, $NaAlO_2$, $NaAlCl_4$, NaCl, and NaI.
[13] The nonaqueous electrolyte solution according to any one of [1] to [12], in which the (II) contains at least one selected from the group consisting of a cyclic ester, an acyclic ester, a cyclic ether, an acyclic ether, a sulfone compound, a sulfoxide compound, and an ionic liquid.
[14] The nonaqueous electrolyte solution according to [13], in which the cyclic ester contains a cyclic carbonate.
[15] The nonaqueous electrolyte solution according to [14], in which the cyclic carbonate contains at least one selected from the group consisting of ethylene carbonate and propylene carbonate.
[16] The nonaqueous electrolyte solution according to [13], in which the acyclic ester contains an acyclic carbonate.

[17] The nonaqueous electrolyte solution according to [16], in which the acyclic carbonate contains at least one selected from the group consisting of ethyl methyl carbonate, dimethyl carbonate, diethyl carbonate, and methyl propyl carbonate.

[18] The nonaqueous electrolyte solution according to any one of [1] to [17], further containing at least one selected from the group consisting of vinylene carbonate, a difluorophosphate salt, a fluorosulfonate salt, 1,3-propenesultone, 1,3-propanesultone, 1,6-diisocyanatohexane, ethynylethylene carbonate, trans-difluoroethylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, methanesulfonic anhydride, methanesulfonyl fluoride, 1,4-dioxane-2,6-dione, tripropargyl phosphate, tris(trimethylsilyl)borate, (ethoxy)pentafluorocyclotriphosphazene, tetrafluoro(picolinato)phosphate, 1,3-dimethyl-1,3-divinyl-1,3-di(1,1,1,3,3,3-hexafluoroisopropyl)disiloxane, N,N'-carbonylbis(N-methylsulfamoylfluoride), tetravinylsilane, trivinylmethylsilane, t-butylbenzene, t-amylbenzene, fluorobenzene, and cyclohexylbenzene.

[19] A nonaqueous electrolyte solution battery, at least including: a positive electrode; a negative electrode; a separator; and the nonaqueous electrolyte solution according to any one of [1] to [18].

ADVANTAGEOUS EFFECTS OF INVENTION

According to the present disclosure, a nonaqueous electrolyte solution capable of exhibiting excellent battery performance when used for a nonaqueous electrolyte solution battery and capable of suppressing coloration when stored for a long period of time at room temperature (25°C) and a nonaqueous electrolyte solution battery using the nonaqueous electrolyte solution can be provided.

DESCRIPTION OF EMBODIMENTS

The term "to" in the present specification is used with the meanings including the numerical values indicated before and after "to" as a lower limit value and an upper limit value.

Hereinafter, the present disclosure will be described in detail, but the description of the constituent elements described below is an example of an embodiment of the present disclosure, and the present disclosure is not limited to these specific contents.

1. Nonaqueous Electrolyte Solution

The nonaqueous electrolyte solution of the present disclosure contains (I) a solute, (II) a nonaqueous organic solvent, (III) a compound represented by the following general formula (1), (IV) a compound represented by the following general formula (4), and (V) at least one compound selected from the group consisting of a nitrate salt, a compound represented by the following general formula (2), and a compound represented by the following general formula (3), and (V)/{(III)+(IV)}, which is the mass ratio of the amount of the (V) to the total amount of the (III) and the (IV), is 0.0040 or more.

[Chem. 5]

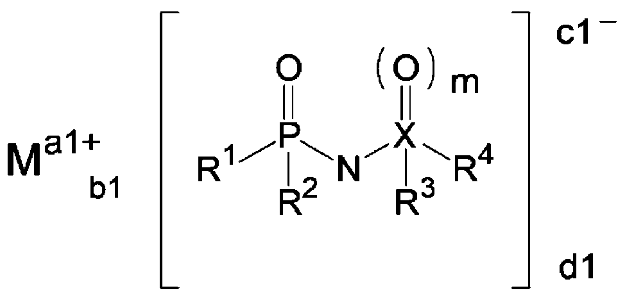

(1)

**In** the general formula (1), $M^{a1+}$ is an alkali metal cation, an alkaline earth metal cation, or an onium cation, and a1 represents the same integer as a valence of a corresponding cation. a1 to d1 each represent an integer of 1 or 2 and satisfy $a1 \times b1 = c1 \times d1$. X is a sulfur atom or a phosphorus atom. When X is a sulfur atom, m is 2, and $R^4$ does not exist, and when X is a phosphorus atom, m is 1. $R^1$ to $R^4$ are each independently a fluorine atom, an oxygen atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group

having 6 to 10 carbon atoms, and the organic group may contain a fluorine atom, an oxygen atom, and/or an unsaturated bond.

[Chem. 6]

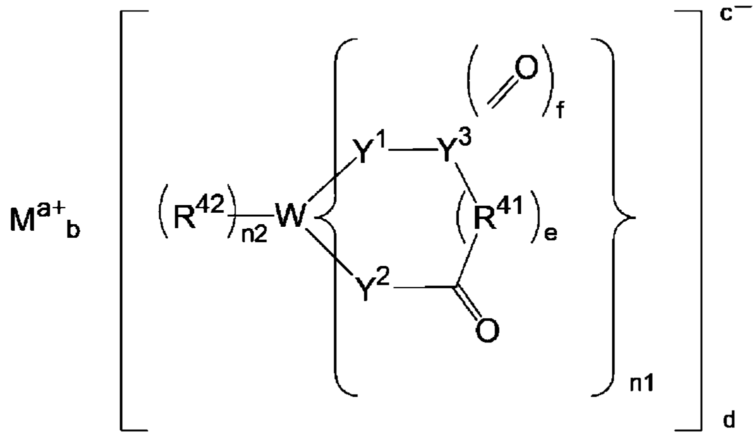

(4)

In the general formula (4), W represents a boron atom, a phosphorus atom, or a silicon atom. n1 is 1 or 2, and n2 is 2 or 4. e is 0 or 1. When e is 0, $R^{41}$ does not exist, and $Y^3$ and the carbonyl group described on the adjacent sides of $R^{41}$ are directly bonded. $R^{41}$ represents an alkylene group having 1 to 10 carbon atoms, a halogenated alkylene group having 1 to 10 carbon atoms, an alkenylene group having 2 to 10 carbon atoms, a halogenated alkenylene group having 2 to 10 carbon atoms, an arylene group having 6 to 20 carbon atoms, or a halogenated arylene group having 6 to 20 carbon atoms (the groups may contain a heteroatom in the structures thereof, and when n1 is 2 or more, n1 $R^{41}$'s may be bonded to each other), and $R^{42}$ represents a halogen atom. $Y^1$ and $Y^2$ each independently represent an oxygen atom or a sulfur atom, and $Y^3$ represents a carbon atom or a sulfur atom. f is 1 when $Y^3$ is a carbon atom, and f is 1 or 2 when $Y^3$ is a sulfur atom. $M^{a+}$ represents an alkali metal cation, an alkaline earth metal cation, or an onium cation, and a represents a valence of a corresponding cation, a to d are 1 or 2 and satisfy a $\times$ b = c $\times$ d.

[Chem. 7]

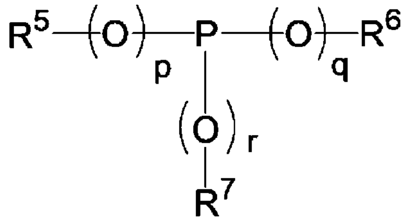

(2)

In the general formula (2), p, q, and r each independently represent 0 or 1. $R^5$ to $R^7$ are each independently a fluorine atom or a hydrocarbon group having 1 to 20 carbon atoms which may be partially or entirely substituted with fluorine, and $R^5$ and $R^6$, $R^5$ and $R^7$, or $R^6$ and $R^7$ may be bonded to each other to form a ring structure.

[Chem. 8]

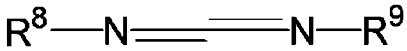

(3)

In the general formula (3), $R^8$ and $R^9$ are each independently a hydrocarbon group having 1 to 20 carbon atoms.

The nonaqueous electrolyte solution of the present disclosure contains (III) and (IV) and thus can exhibit excellent battery performance when used for a nonaqueous electrolyte solution battery. Moreover, by further adding (V) in such a manner that a mass ratio of an amount of (V) to an total amount of (III) and (IV) becomes 0.0040 or more, it is possible to suppress coloration during storage for a long period of time at room temperature (25°C) while maintaining the excellent battery performance.

Hereinafter, each component will be explained in detail.

<(I) Solute>

The (I) solute (also referred to as "(I)") contained in the nonaqueous electrolyte solution of the present disclosure will be explained.

The (I) solute is not particularly limited and may be, for example, at least one selected from the group consisting of $LiPF_6$, $LiBF_4$, $LiSbF_6$, $LiAsF_6$, $LiClO_4$, $LiN(FSO_2)_2$, $LiAlO_2$, $LiAlCl_4$, LiCl, and LiI or at least one selected from the group consisting of $NaPF_6$, $NaBF_4$, $NaSbF_6$, $NaAsF_6$, $NaClO_4$, $NaN(FSO_2)_2$, $NaAlO_2$, $NaAlCl_4$, NaCl, and NaI.

In the nonaqueous electrolyte solution of the present disclosure, as (I), one type of compound may be used alone, or two or more types of compound may be mixed and used in any combination and any ratio according to the application.

The concentration of (I) with respect to the total amount of the nonaqueous electrolyte solution is not particularly limited. For example, the lower limit of the concentration of (I) may be 0.5 mol/L or more, may be 0.7 mol/L or more or may be 0.9 mol/L or more. The upper limit of the concentration of (I) may be 5 mol/L or less, may be 4 mol/L or less or may be 2 mol/L or less. Here, when two or more types are used as (I), the total concentration of these solutes is preferably in the above range.

The liquid temperature for dissolving (I) in (II) a nonaqueous organic solvent is not particularly limited but may be -20 to 80°C or 0 to 60°C.

Moreover, the cation of the solute is more preferably a lithium ion for use for a lithium ion battery application and is more preferably a sodium ion for use for a sodium ion battery application.

<(II) Nonaqueous Organic Solvent>

The (II) nonaqueous organic solvent (also referred to as "(II)") contained in the nonaqueous electrolyte solution of the present disclosure will be explained. The type of the (II) nonaqueous organic solvent is not particularly limited, and any nonaqueous organic solvent can be used.

Specific examples of the (II) nonaqueous organic solvent include the following nonaqueous organic solvents.

Examples of the cyclic ester include cyclic carbonates such as propylene carbonate (hereinafter, sometimes referred to as "PC"), ethylene carbonate (hereinafter, sometimes referred to as "EC"), fluoroethylene carbonate (hereinafter, sometimes referred to as "FEC"), and butylene carbonate, as well as γ-butyrolactone and γ-valerolactone. Here, when a content of the FEC with respect to the total amount of the nonaqueous electrolyte solution is 10% by mass or less, the FEC is defined as the other additive described later.

Examples of the acyclic ester include acyclic carbonates such as diethyl carbonate (hereinafter, sometimes referred to as "DEC"), dimethyl carbonate (hereinafter, sometimes referred to as "DMC"), ethyl methyl carbonate (hereinafter, sometimes referred to as "EMC"), and methyl propyl carbonate, as well as methyl acetate, methyl propionate, and ethyl propionate (hereinafter, sometimes referred to as "EP").

Examples of the cyclic ether include tetrahydrofuran, 2-methyltetrahydrofuran, and dioxane.

Examples of the acyclic ether include dimethoxyethane and diethyl ether.

Other examples include sulfone compounds and sulfoxide compounds such as dimethyl sulfoxide and sulfolane. In addition, an ionic liquid and the like can also be exemplified.

The (II) nonaqueous organic solvent may contain at least one selected from the group consisting of a cyclic ester, an acyclic ester, a cyclic ether, an acyclic ether, a sulfone compound, a sulfoxide compound, and an ionic liquid.

The cyclic ester may contain a cyclic carbonate, and the cyclic carbonate may contain at least one selected from the group consisting of ethylene carbonate, propylene carbonate, and fluoroethylene carbonate or may contain at least one selected from the group consisting of ethylene carbonate and propylene carbonate.

The acyclic ester may contain an acyclic carbonate, and the acyclic carbonate may contain at least one selected from the group consisting of ethyl methyl carbonate, dimethyl carbonate, diethyl carbonate, and methyl propyl carbonate.

In the nonaqueous electrolyte solution of the present disclosure, as (II), one type of compound may be used alone, or two or more types of compound may be mixed and used in any combination and any ratio according to the application.

The cyclic carbonate content is not particularly limited and is any content as long as the effects of the present disclosure are not significantly impaired, but the content in the case where one type is used alone is 3% by volume or more and more preferably 5% by volume or more in 100% by volume of the nonaqueous organic solvent. Within this range, a decrease in electrical conductivity resulting from a decrease in the permittivity of the nonaqueous electrolyte solution can be avoided, thereby facilitating favorable high-current discharge characteristics, stability with respect to the negative electrode, and cycle characteristics of the nonaqueous electrolyte solution battery. The content is usually 90% by volume or less, preferably 85% by volume or less, and more preferably 80% by volume or less. Within this range, the viscosity of the nonaqueous electrolyte solution can be maintained within an appropriate range, a decrease in ionic conductivity can be suppressed, and thus favorable load characteristics of the nonaqueous electrolyte solution battery can be facilitated.

Moreover, two or more types of cyclic carbonate can be used in any combination. One of preferable combinations

is a combination of ethylene carbonate and propylene carbonate. In this case, the volume ratio of ethylene carbonate to propylene carbonate is preferably 99:1 to 40:60 and particularly preferably 95:5 to 50:50. Further, the amount of propylene carbonate in the entire nonaqueous organic solvent is not particularly limited and is any amount as long as the effects of the present disclosure are not significantly impaired, but the amount is usually 1% by volume or more, preferably 2% by volume or more, and more preferably 3% by volume or more, and is usually 30% by volume or less, preferably 25% by volume or less, and more preferably 20% by volume or less. Propylene carbonate is preferably contained in this range because the low-temperature characteristic is more excellent while the characteristics of the combination of ethylene carbonate and a dialkyl carbonate are maintained.

One type of acyclic ester may be used alone, or two or more types may be used in any combination and at any ratio.

The acyclic ester content is not particularly limited but is usually 15% by volume or more, preferably 20% by volume or more, and more preferably 25% by volume or more in 100% by volume of the nonaqueous organic solvent. The content is usually 90% by volume or less, preferably 85% by volume or less, and more preferably 80% by volume or less. By setting the acyclic ester content within the above range, the viscosity of the nonaqueous electrolyte solution can be maintained within an appropriate range, a decrease in ionic conductivity can be suppressed, and thus favorable input/output characteristics and charge/discharge rate characteristics of the nonaqueous electrolyte solution battery can be facilitated. In addition, a decrease in electrical conductivity resulting from a decrease in the permittivity of the nonaqueous electrolyte solution can be avoided, thereby facilitating favorable input/output characteristics and charge/-discharge rate characteristics of the nonaqueous electrolyte solution battery.

Further, by combining ethylene carbonate with a specific acyclic ester in a specific content, the battery performance can be significantly improved.

For example, when dimethyl carbonate and ethyl methyl carbonate are selected as specific acyclic esters, the ethylene carbonate content is not particularly limited, and is any content as long as the effects of the present disclosure are not significantly impaired, but the content is usually 5% by volume or more and preferably 10% by volume or more, and is usually 45% by volume or less and preferably 40% by volume or less. The dimethyl carbonate content is usually 20% by volume or more and preferably 30% by volume or more, and is usually 50% by volume or less and preferably 45% by volume or less, and the ethyl methyl carbonate content is usually 20% by volume or more and preferably 30% by volume or more, and is usually 50% by volume or less and preferably 45% by volume or less. By setting the contents within the above ranges, the electrolyte precipitation temperature at low temperatures can be lowered, the viscosity of the nonaqueous electrolyte solution can also be reduced to improve ionic conductivity, and high input/output can be obtained even at low temperatures.

The acyclic ether content is not particularly limited and is any content as long as the effects of the present disclosure are not significantly impaired, but the content is usually 1% by volume or more, preferably 2% by volume or more, and more preferably 3% by volume or more, and is usually 30% by volume or less, preferably 25% by volume or less, and more preferably 20% by volume or less in 100% by volume of the nonaqueous organic solvent. When the content of the acyclic ether is within the above range, it is easy to secure the effect of improving the ionic conductivity of the acyclic ether due to improvement in the lithium ion dissociation degree and a decrease in the viscosity. When the negative electrode active material is a carbonaceous material, the phenomenon in which the acyclic ether is cointercalated with lithium ions can be suppressed, thereby allowing the input/output characteristics and charge/discharge rate characteristics to be maintained within appropriate ranges.

The sulfone compound content is not particularly limited and is any content as long as the effects of the present disclosure are not significantly impaired, but the content is usually 0.3% by volume or more, preferably 0.5% by volume or more, and more preferably 1% by volume or more, and is usually 40% by volume or less, preferably 35% by volume or less, and more preferably 30% by volume or less in 100% by volume of the nonaqueous organic solvent. When the sulfone compound content is within the above range, the effect of improving durability, such as cycle characteristics and storage characteristics, can be readily obtained. In addition, the viscosity of the nonaqueous electrolyte solution can be maintained within an appropriate range to avoid a decrease in electrical conductivity, and thus the input/output characteristics and charge/discharge rate characteristics of the nonaqueous electrolyte solution battery can be maintained within appropriate ranges.

<(III) Compound Represented by General Formula (1)>

The (III) compound represented by the following general formula (1) (also referred to as "(III)") contained in the nonaqueous electrolyte solution of the present disclosure will be explained.

[Chem. 9]

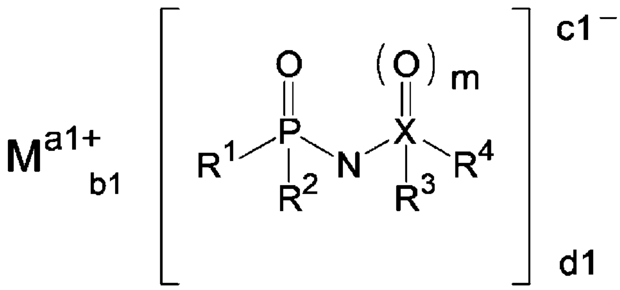

(1)

In the general formula (1), $M^{a1+}$ is an alkali metal cation, an alkaline earth metal cation, or an onium cation, and a1 represents the same integer as a valence of a corresponding cation. a1 to d1 each represent an integer of 1 or 2 and satisfy a1 × b1 = c1 × d1. X is a sulfur atom or a phosphorus atom. When X is a sulfur atom, m is 2, and $R^4$ does not exist, and when X is a phosphorus atom, m is 1. $R^1$ to $R^4$ are each independently a fluorine atom, an oxygen atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and the organic group may contain a fluorine atom, an oxygen atom, and/or an unsaturated bond.

In the general formula (1), $R^1$ to $R^4$ are each independently a fluorine atom, an oxygen atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and the organic group may contain a fluorine atom, an oxygen atom, and/or an unsaturated bond.

The organic group may contain a substituent in the structure thereof.

The alkyl group represented by $R^1$ to $R^4$ may be linear or a branched chain, and examples thereof include an alkyl group and a fluorine-containing alkyl group, each of which has 1 to 10 carbon atoms, such as a methyl group, an ethyl group, a propyl group, an isopropyl group, a butyl group, a sec-butyl group, a tert-butyl group, a pentyl group, a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group.

The alkoxy group represented by $R^1$ to $R^4$ may be linear or a branched chain, and examples thereof include an alkoxy group having 1 to 10 carbon atoms and a fluorine-containing alkoxy group, such as a methoxy group, an ethoxy group, a propoxy group, an isopropoxy group, a butoxy group, a sec-butoxy group, a tert-butoxy group, a pentyloxy group, a trifluoromethoxy group, a 2,2-difluoroethoxy group, a 2,2,2-trifluoroethoxy group, a 2,2,3,3-tetrafluoropropoxy group, a 1,1,1-trifluoroisopropoxy group, and a 1,1,1,3,3,3-hexafluoroisopropoxy group.

The alkenyl group represented by $R^1$ to $R^4$ may be linear or a branched chain, and examples thereof include an alkenyl group having 2 to 10 carbon atoms, such as a vinyl group, a 1-propenyl group, a 2-propenyl group, an isopropenyl group, a 2-butenyl group, a 3-butenyl group, and a 1,3-butadienyl group, and a fluorine-containing alkenyl group.

The alkenyloxy group represented by $R^1$ to $R^4$ may be linear or a branched chain, and examples thereof include an alkenyloxy group having 2 to 10 carbon atoms, such as a vinyloxy group, a 1-propenyloxy group, a 2-propenyloxy group, an isopropenyloxy group, a 2-butenyloxy group, a 3-butenyloxy group, and a 1,3-butadienyloxy group, and a fluorine-containing alkenyloxy group.

The alkynyl group represented by $R^1$ to $R^4$ may be linear or a branched chain, and examples thereof include an alkynyl group having 2 to 10 carbon atoms, such as an ethynyl group, a 2-propynyl group, and a 1,1-dimethyl-2-propynyl group, and a fluorine-containing alkynyl group.

The alkynyloxy group represented by $R^1$ to $R^4$ may be linear or a branched chain, and examples thereof include an alkynyloxy group having 2 to 10 carbon atoms, such as an ethynyloxy group, a 2-propynyloxy group, and a 1,1-dimethyl-2-propynyloxy group, and a fluorine-containing alkynyloxy group.

Examples of the cycloalkyl group represented by $R^1$ to $R^4$ include a cycloalkyl group having 3 to 10 carbon atoms, such as a cyclopentyl group and a cyclohexyl group, and a fluorine-containing cycloalkyl group.

Examples of the cycloalkoxy group represented by $R^1$ to $R^4$ include a cycloalkoxy group having 3 to 10 carbon

atoms, such as a cyclopentyloxy group and a cyclohexyloxy group, and a fluorine-containing cycloalkoxy group.

Examples of the cycloalkenyl group represented by $R^1$ to $R^4$ include a cycloalkenyl group having 3 to 10 carbon atoms, such as a cyclopentenyl group and a cyclohexenyl group, and a fluorine-containing cycloalkenyl group.

Examples of the cycloalkenyloxy group represented by $R^1$ to $R^4$ include a cycloalkenyloxy group having 3 to 10 carbon atoms, such as a cyclopentenyloxy group and a cyclohexenyloxy group, and a fluorine-containing cycloalkenyloxy group.

Examples of the aryl group represented by $R^1$ to $R^4$ include an aryl group having 6 to 10 carbon atoms, such as a phenyl group, a tolyl group, and a xylyl group, and a fluorine-containing aryl group.

Examples of the aryloxy group represented by $R^1$ to $R^4$ include an aryloxy group having 6 to 10 carbon atoms, such as a phenyloxy group, a tolyloxy group, and a xylyloxy group, and a fluorine-containing aryloxy group.

$R^1$ to $R^4$ are each independently preferably a fluorine atom or an alkoxy group having a fluorine atom because the ionic conductivity in a nonaqueous electrolyte solution increases due to improvement of the ion dissociation degree due to the strong electron-withdrawing property thereof. Furthermore, a fluorine atom is more preferable because the ionic conductivity in a nonaqueous electrolyte solution becomes very high due to the effect of improvement of the mobility due to a decrease in anion size. At least one of $R^1$ to $R^4$ is preferably a fluorine atom.

Moreover, $R^1$ to $R^4$ preferably have 6 or less carbon atoms. The number of carbon atoms is preferably 6 or less because the ionic conductivity tends to be relatively high.

**In** the general formula (1), $M^{a1+}$ represents an alkali metal cation, an alkaline earth metal cation, or an onium cation. The type thereof is not particularly limited as long as the performance of the nonaqueous electrolyte solution and the nonaqueous electrolyte solution battery of the present disclosure is not impaired, and various ones can be selected from the above.

Examples of the alkali metal cation represented by $M^{dl+}$ include a lithium ion, a sodium ion, a potassium ion, a rubidium ion, and a cesium ion.

Examples of the alkaline earth metal cation represented by $M^{a1+}$ include a magnesium ion, a calcium ion, and a barium ion.

Examples of the onium cation represented by $M^{a1+}$ include tetraalkylammonium, tetraalkylphosphonium, and an imidazolium derivative.

a1 represents a valence of a corresponding cation and may be 1 or 2.

$M^{a1+}$ is preferably a lithium ion, a sodium ion, a potassium ion, a tetramethylammonium ion, a tetraethylammonium ion, a tetrabutylphosphonium ion, or the like particularly from the viewpoint of playing a role of helping the ionic conduction in a nonaqueous electrolyte solution battery.

Moreover, $M^{a1+}$ is more preferably a lithium ion for use for a lithium ion battery application and is more preferably a sodium ion for use for a sodium ion battery application.

The compound represented by the general formula (1) is preferably any of the compounds represented by the following general formulae (1-1) to (1-5).

[Chem. 10]

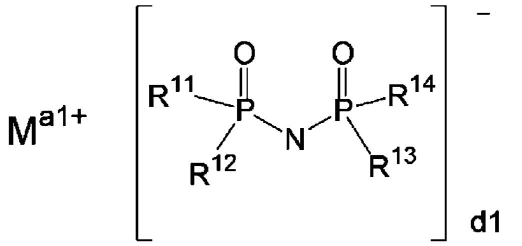

(1-1)

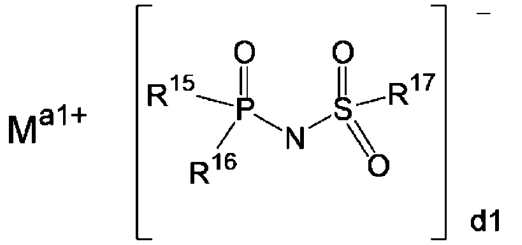

(1-2)

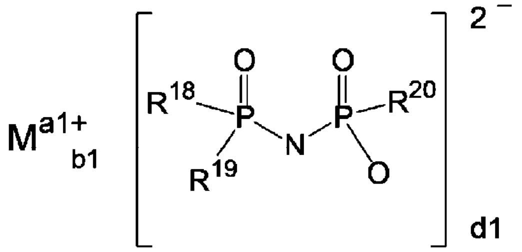

(1-3)

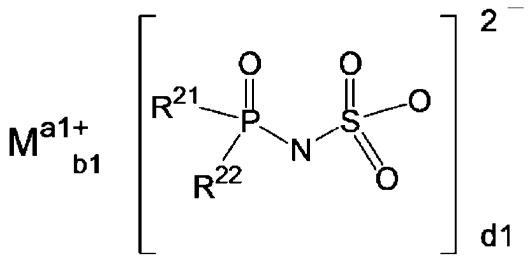

(1-4)

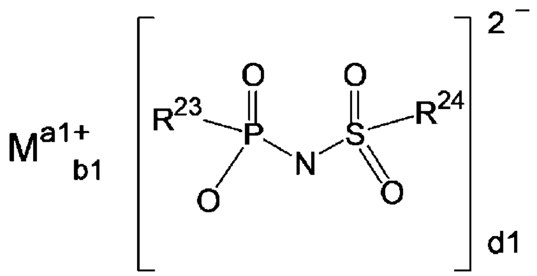

(1-5)

**In** the general formulae (1-1) to (1-5), $M^{a1+}$ is an alkali metal cation, an alkaline earth metal cation, or an onium cation, and a1 represents the same integer as a valence of a corresponding cation. a1 to d1 each represent an integer of 1 or 2 and satisfy a1 = d1 in the general formulae (1-1) and (1-2) and satisfy a1 × b1 = 2 × d1 in the general formulae (1-3) to (1-5).

$R^{11}$ to $R^{16}$ and $R^{18}$ to $R^{23}$ are each independently a fluorine atom or an organic group selected from the group consisting of an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, and an aryloxy group having 6 to 10 carbon atoms, and the organic group may contain a fluorine atom, an oxygen atom, and/or an unsaturated bond.

$R^{17}$ and $R^{14}$ are each a fluorine atom or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and the organic group may contain a

fluorine atom, an oxygen atom, and/or an unsaturated bond.

$M^{a1+}$ in the general formulae (1-1) to (1-5) has the same meanings as $M^{a1+}$ in the general formula (1), and preferable examples thereof are also the same.

Examples of the alkoxy group having 1 to 10 carbon atoms, the alkenyloxy group having 2 to 10 carbon atoms, the alkynyloxy group having 2 to 10 carbon atoms, the cycloalkoxy group having 3 to 10 carbon atoms, the cycloalkenyloxy group having 3 to 10 carbon atoms, and the aryloxy group having 6 to 10 carbon atoms as $R^{11}$ to $R^{16}$ and $R^{18}$ to $R^{23}$ in the general formulae (1-1) to (1-5) include the same groups as the groups as $R^1$ to $R^4$ in the general formula (1).

$R^{11}$ to $R^{16}$ and $R^{18}$ to $R^{23}$ are each independently preferably a fluorine atom or an alkoxy group having a fluorine atom, and more preferably a fluorine atom. Moreover, $R^{11}$ to $R^{16}$ and $R^{18}$ to $R^{23}$ preferably have 6 or less carbon atoms.

Examples of the alkyl group having 1 to 10 carbon atoms, the alkoxy group having 1 to 10 carbon atoms, the alkenyl group having 2 to 10 carbon atoms, the alkenyloxy group having 2 to 10 carbon atoms, the alkynyl group having 2 to 10 carbon atoms, the alkynyloxy group having 2 to 10 carbon atoms, the cycloalkyl group having 3 to 10 carbon atoms, the cycloalkoxy group having 3 to 10 carbon atoms, the cycloalkenyl group having 3 to 10 carbon atoms, the cycloalkenyloxy group having 3 to 10 carbon atoms, the aryl group having 6 to 10 carbon atoms, and the aryloxy group having 6 to 10 carbon atoms as $R^{17}$ and $R^{24}$ in the general formulae (1-2) and (1-5) include the same groups as the groups as $R^1$ to $R^4$ in the general formula (1).

$R^{17}$ and $R^{24}$ are preferably fluorine atoms. Moreover, $R^{17}$ and $R^{24}$ preferably have 6 or less carbon atoms.

Of these, the compound represented by the general formula (1) is preferably a compound represented by the general formula (1-1) or (1-2), and more preferably a bis(difluorophosphoryl)imide salt or a (fluorosulfonyl)(difluorophosphoryl)imide salt.

Specific examples of the anion structure of the compound represented by the general formula (1) are shown below, but the anion structure is not limited thereto.

[Chem. 11]

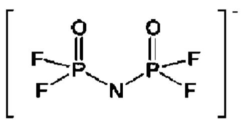
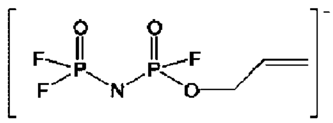
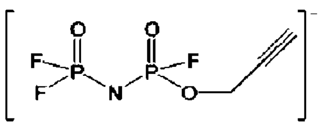
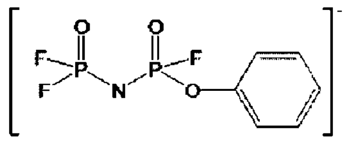
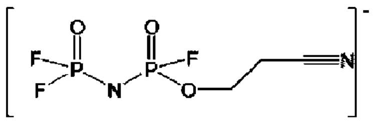
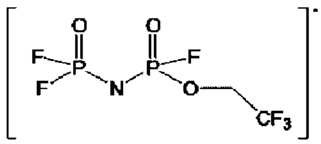
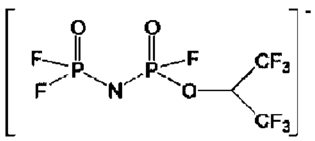
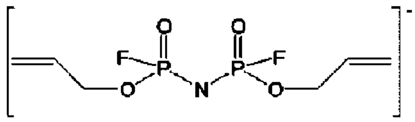
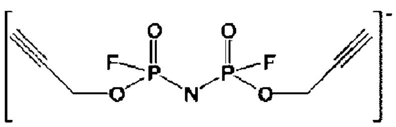
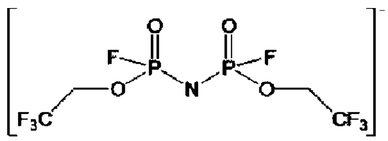

[Chem. 12]

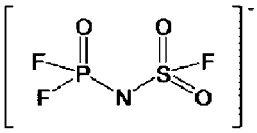

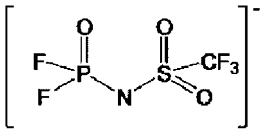

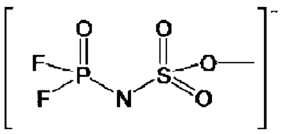

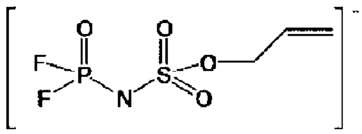

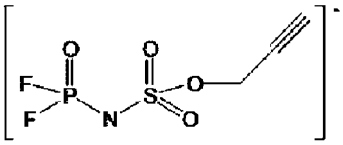

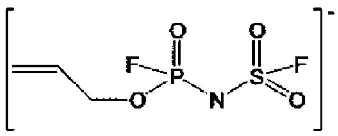

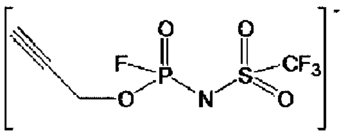

[Chem. 13]

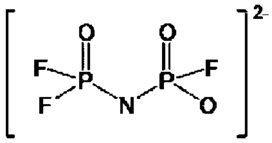

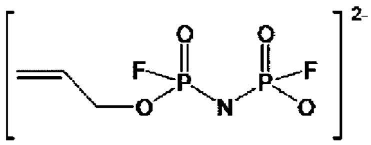

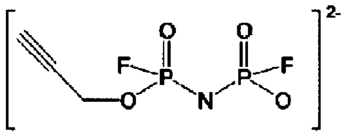

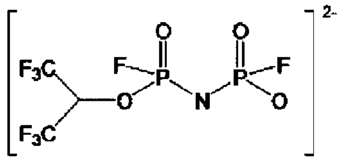

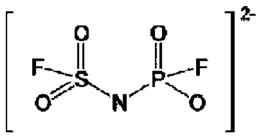

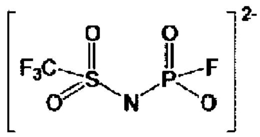

[Chem. 14]

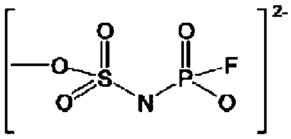

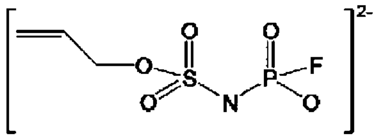

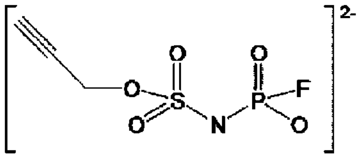

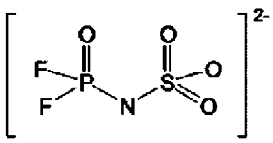

[Chem. 15]

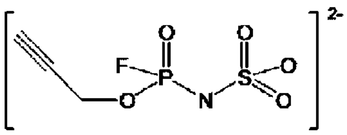

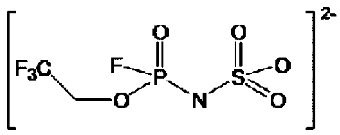

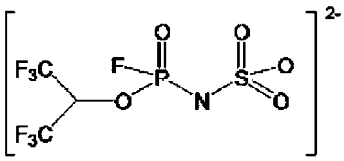

In the nonaqueous electrolyte solution of the present disclosure, one type of compound may be used alone as (III), or two or more types of compound may be mixed and used in any combination and any ratio according to the application.

In the nonaqueous electrolyte solution of the present disclosure, the content of (III) with respect to the total amount of the nonaqueous electrolyte solution (also referred to as "concentration of (III)") may be 0.01% by mass or more and 10% by mass or less. The lower limit of the concentration of (III) may be 0.05% by mass or more, may be 0.1% by mass or more, or may be 0.5% by mass or more. The upper limit of the concentration of (III) may be 5% by mass or less, may be 3.5% by mass or less, or may be 2.5% by mass or less.

<(IV) Compound Represented by General Formula (4)>

The (IV) compound represented by the following general formula (4) (also referred to as "(IV)") contained in the nonaqueous electrolyte solution of the present disclosure will be explained.

[Chem. 16]

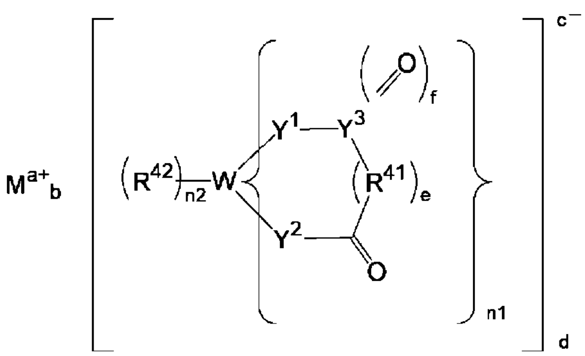

(4)

In the general formula (4), W represents a boron atom, a phosphorus atom, or a silicon atom. n1 is 1 or 2, and n2 is 2 or 4. e is 0 or 1. When e is 0, $R^{41}$ does not exist, and $Y^3$ and the carbonyl group described on the adjacent sides of $R^{41}$ are directly bonded. $R^{41}$ represents an alkylene group having 1 to 10 carbon atoms, a halogenated alkylene group having 1 to 10 carbon atoms, an alkenylene group having 2 to 10 carbon atoms, a halogenated alkenylene group having 2 to 10 carbon atoms, an arylene group having 6 to 20 carbon atoms, or a halogenated arylene group having 6 to 20 carbon atoms (the groups may contain a heteroatom in the structures thereof, and when n1 is 2 or more, n1 $R^{41}$'s may be bonded to each other), and $R^{42}$ represents a halogen atom. $Y^1$ and $Y^2$ each independently represent an oxygen atom or a sulfur atom, and $Y^3$ represents a carbon atom or a sulfur atom. f is 1 when $Y^3$ is a carbon atom, and f is 1 or 2 when $Y^3$ is a sulfur atom. $M^{a+}$ represents an alkali metal cation, an alkaline earth metal cation, or an onium cation, and a represents a valence of a corresponding cation. a to d are 1 or 2 and satisfy $a \times b = c \times d$.

In the general formula (4), W represents a boron atom, a phosphorus atom, or a silicon atom and is preferably a boron atom or a phosphorus atom.

$R^{41}$ represents an alkylene group having 1 to 10 carbon atoms, a halogenated alkylene group having 1 to 10 carbon atoms, an alkenylene group having 2 to 10 carbon atoms, a halogenated alkenylene group having 2 to 10 carbon atoms, an arylene group having 6 to 20 carbon atoms, or a halogenated arylene group having 6 to 20 carbon atoms. The groups may contain a substituent or may contain a heteroatom in the structures thereof. Moreover, when n1 is 2 or more, n1 $R^{41}$'s may be bonded to each other.

Examples of the alkylene group represented by $R^{41}$ include an alkylene group having 1 to 10 carbon atoms, such as a methylene group, an ethylene group, a propylene group, an isopropylene group, a butylene group, an isobutylene group, and a pentylene group.

Examples of the halogenated alkylene group represented by $R^{41}$ include a halogenated alkylene group having 1 to 10 carbon atoms, such as a difluoromethylene group, a 2,2-difluoroethylene group, and a 2,2,3,3-tetrafluoropropylene group.

Examples of the alkenylene group represented by $R^{41}$ include an alkenylene group having 2 to 10 carbon atoms, such as a vinylene group, a 1-propenylene group, a 2-propenylene group, an isopropenylene group, a 2-butenylene group, a 3-butenylene group, and a 1,3-butadienylene group.

Examples of the halogenated alkenylene group represented by $R^{41}$ include a halogenated alkenylene group having 2 to 10 carbon atoms, such as a difluorovinylene group.

Examples of the arylene group represented by $R^{41}$ include an arylene group having 6 to 20 carbon atoms, such as a phenylene group, a tolylene group, and a xylylene group.

Examples of the halogenated arylene group represented by $R^{41}$ include a halogenated arylene group having 6 to 20 carbon atoms, such as a fluorinated phenylene group.

$R^{41}$ is preferably an alkylene group having 1 to 10 carbon atoms or an alkenylene group having 2 to 10 carbon atoms, and more preferably a methylene group or a vinylene group.

Examples of the halogen atom represented by $R^{42}$ include a fluorine atom, a chlorine atom, and a bromine atom.

$R^{42}$ is preferably a fluorine atom.

$Y^1$ and $Y^2$ each independently represent an oxygen atom or a sulfur atom, and it is preferable that both are oxygen atoms.

$Y^3$ represents a carbon atom or a sulfur atom and is preferably a carbon atom.

Examples of the alkali metal cation, the alkaline earth metal cation, and the onium cation represented by $M^{a+}$ include the alkali metal cations, the alkaline earth metal cations, and the onium cations listed as $M^{a1+}$ in the general formula (1) described above, and preferable examples thereof are also the same.

Moreover, $M^{a+}$ is more preferably a lithium ion for use for a lithium ion battery application and is more preferably a sodium ion for use for a sodium ion battery application.

The compound represented by the general formula (4) is preferably an oxalato salt compound. That is, the compound is preferably a compound represented by the following general formula (4-1).

[Chem. 17]

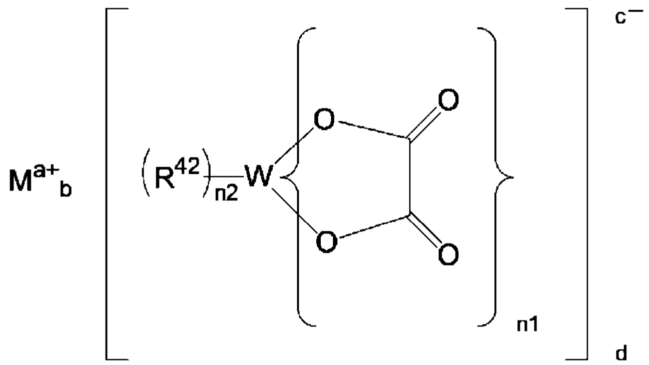

(4-1)

In the general formula (4-1), W, n1, n2, $R^{42}$, $M^{a+}$, and a to d have the same meanings as W, n1, n2, $R^{42}$, $M^{a+}$, and a to d in the general formula (4), and preferable examples thereof are also the same.

Examples of the compound represented by the general formula (4) include a difluoro(oxalato)borate, a bis(oxalato)borate, a tetrafluoro(oxalato)phosphate, a difluorobis(oxalato)phosphate, a tris(oxalato)phosphate, a difluorobis(oxalato)silicate, a tetrafluoro(malonato)phosphate, a difluoro(sulfoacetato)borate, a difluoro(maleato)borate, and a difluoro(fumarato)borate. Of these, from the viewpoint of solubility in an electrolyte solution and thermal stability at a high temperature, at least one salt selected from the group consisting of a difluoro(oxalato)borate, a bis(oxalato)borate, a tetrafluoro(oxalato)phosphate, a difluorobis(oxalato)phosphate, and a tris(oxalato)phosphate is preferable.

In the nonaqueous electrolyte solution of the present disclosure, one type of compound may be used alone as (IV), or two or more types of compound may be mixed and used in any combination and any ratio according to the application.

In the nonaqueous electrolyte solution of the present disclosure, the content of (IV) with respect to the total amount of the nonaqueous electrolyte solution (also referred to as "concentration of (IV)") may be 0.01% by mass or more and 10% by mass or less. The lower limit of the concentration of (IV) may be 0.05% by mass or more, may be 0.1% by mass or more, or may be 0.5% by mass or more. The upper limit of the concentration of (IV) may be 5% by mass or less, may be 3.5% by mass or less, or may be 2.5% by mass or less.

<(V) At Least One Compound Selected from Group Consisting of Nitrate Salt, Compound Represented by General Formula (2), and Compound Represented by General Formula (3)>

The (V) at least one compound selected from the group consisting of a nitrate salt, a compound represented by the following general formula (2), and a compound represented by the following general formula (3) (also referred to as "(V)") contained in the nonaqueous electrolyte solution of the present disclosure will be explained.

(Nitrate Salt)

Examples of the nitrate salt include a nitrate salt of an alkali metal such as a lithium ion, a sodium ion, a potassium ion, a rubidium ion, and a cesium ion, and a nitrate salt of an alkaline earth metal such as a magnesium ion, a calcium ion, and a barium ion.

The nitrate salt is more preferably lithium nitrate for use for a lithium ion battery application and is more preferably sodium nitrate for use for a sodium ion battery application.

(Compound Represented by General Formula (2))

[Chem. 18]

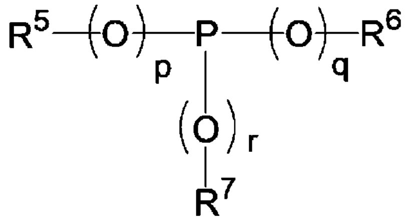

(2)

In the general formula (2), p, q, and r each independently represent 0 or 1. $R^5$ to $R^7$ are each independently a fluorine atom or a hydrocarbon group having 1 to 20 carbon atoms which may be partially or entirely substituted with fluorine, and $R^5$ and $R^6$, $R^5$ and $R^7$, or $R^6$ and $R^7$ may be bonded to each other to form a ring structure.

In the general formula (2), p, q, and r each independently represent 0 or 1, and it is preferable that all of them represent 1.

$R^5$ to $R^7$ each independently represent a fluorine atom or a hydrocarbon group having 1 to 20 carbon atoms which may be partially or entirely substituted with fluorine.

Examples of the hydrocarbon group having 1 to 20 carbon atoms represented by $R^5$ to $R^7$ include an alkyl group having 1 to 20 carbon atoms, an alkenyl group having 2 to 20 carbon atoms, an alkynyl group having 2 to 20 carbon atoms, a cycloalkyl group having 3 to 20 carbon atoms, a cycloalkenyl group having 3 to 20 carbon atoms, and an aryl group having 6 to 20 carbon atoms.

The hydrocarbon group having 1 to 20 carbon atoms may contain a substituent in the structure thereof.

The alkyl group represented by $R^5$ to $R^7$ may be linear or a branched chain, and examples thereof include an alkyl group and a fluorine-containing alkyl group, each of which has 1 to 20 carbon atoms, such as a methyl group, an ethyl group, a propyl group, an isopropyl group, a butyl group, a sec-butyl group, a tert-butyl group, a pentyl group, a trifluoromethyl group, a 2,2-difluoroethyl group, a 2,2,2-trifluoroethyl group, a 2,2,3,3-tetrafluoropropyl group, and a 1,1,1,3,3,3-hexafluoroisopropyl group.

The alkenyl group represented by $R^5$ to $R^7$ may be linear or a branched chain, and examples thereof include an alkenyl group having 2 to 20 carbon atoms, such as a vinyl group, a 1-propenyl group, a 2-propenyl group, an isopropenyl group, a 2-butenyl group, a 3-butenyl group, and a 1,3-butadienyl group, and a fluorine-containing alkenyl group.

The alkynyl group represented by $R^5$ to $R^7$ may be linear or a branched chain, and examples thereof include an alkynyl group having 2 to 20 carbon atoms, such as an ethynyl group, a 2-propynyl group, and a 1,1-dimethyl-2-propynyl group, and a fluorine-containing alkynyl group.

Examples of the cycloalkyl group represented by $R^5$ to $R^7$ include a cycloalkyl group having 3 to 20 carbon atoms, such as a cyclopentyl group and a cyclohexyl group, and a fluorine-containing cycloalkyl group.

Examples of the cycloalkenyl group represented by $R^5$ to $R^7$ include a cycloalkenyl group having 3 to 20 carbon atoms, such as a cyclopentenyl group and a cyclohexenyl group, and a fluorine-containing cycloalkenyl group.

Examples of the aryl group represented by $R^5$ to $R^7$ include an aryl group having 6 to 20 carbon atoms, such as a phenyl group, a tolyl group, and a xylyl group, and a fluorine-containing aryl group.

From the viewpoint of coloration suppression effect, $R^5$, $R^6$, and $R^7$ are each independently preferably an alkyl group having 1 to 20 carbon atoms, a fluorine-containing alkyl group having 1 to 20 carbon atoms, or an aryl group having 6 to 20 carbon atoms, more preferably a methyl group, an ethyl group, an isopropyl group, a 1,1,1,3,3,3-hexafluoroisopropyl group, or a phenyl group, further preferably an ethyl group, an isopropyl group, a 1,1,1,3,3,3-hexafluoroisopropyl group, or a phenyl group, particularly preferably an isopropyl group, a 1,1,1,3,3,3-hexafluoroisopropyl group, or a phenyl group, and most preferably a phenyl group.

**In** the compound represented by the general formula (2), it is preferable that q, r, and s are all 1 and that all of $R^5$ to $R^7$ are the same hydrocarbon group having 1 to 20 carbon atoms which may be partially or entirely substituted with fluorine.

That is, the compound represented by the general formula (2) is preferably a compound represented by the following general formula (2-1).

[Chem. 19]

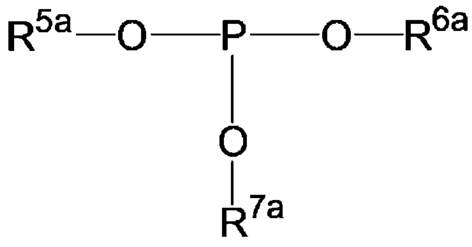

(2-1)

$R^{5a}$ to $R^{7a}$ in the general formula (2-1) all represent the same hydrocarbon group having 1 to 20 carbon atoms which may be partially or entirely substituted with fluorine.

Examples of the hydrocarbon group having 1 to 20 carbon atoms which may be partially or entirely substituted with fluorine represented by $R^{5a}$ to $R^{7a}$ include the hydrocarbon group having 1 to 20 carbon atoms which may be partially or entirely substituted with fluorine represented by $R^5$ to $R^7$ in the general formula (2), and preferable examples thereof are also the same.

Examples of the compound represented by the general formula (2) are shown below, but the compound is not limited thereto.

[Chem. 20]

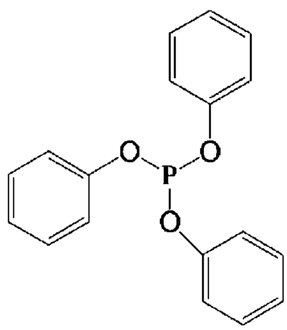

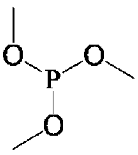

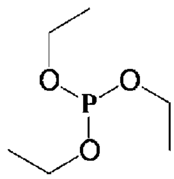

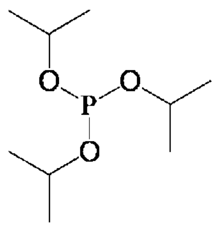

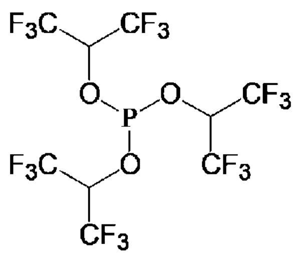

(Compound Represented by General Formula (3))

[Chem. 21]

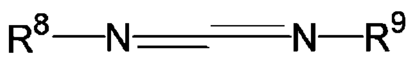

(3)

In the general formula (3), $R^8$ and $R^9$ are each independently a hydrocarbon group having 1 to 20 carbon atoms.

Examples of the hydrocarbon group having 1 to 20 carbon atoms represented by $R^8$ and $R^9$ include an alkyl group having 1 to 20 carbon atoms, an alkenyl group having 2 to 20 carbon atoms, an alkynyl group having 2 to 20 carbon atoms, a cycloalkyl group having 3 to 20 carbon atoms, a cycloalkenyl group having 3 to 20 carbon atoms, and an aryl group having 6 to 20 carbon atoms.

The hydrocarbon group having 1 to 20 carbon atoms may contain a substituent in the structure thereof.

Examples of the alkyl group having 1 to 20 carbon atoms, the alkenyl group having 2 to 20 carbon atoms, the

alkynyl group having 2 to 20 carbon atoms, the cycloalkyl group having 3 to 20 carbon atoms, the cycloalkenyl group having 3 to 20 carbon atoms, and the aryl group having 6 to 20 carbon atoms represented by $R^8$ and $R^9$ include the groups as $R^5$ to $R^7$ in the general formula (2).

$R^8$ and $R^9$ are each independently preferably an alkyl group having 1 to 20 carbon atoms or a cycloalkyl group having 3 to 20 carbon atoms, more preferably an alkyl group having 1 to 6 carbon atoms or a cycloalkyl group having 5 or 6 carbon atoms, and further preferably a methyl group, an ethyl group, an isopropyl group, or a cyclohexyl group.

Moreover, $R^8$ and $R^9$ may represent the same hydrocarbon group having 1 to 20 carbon atoms.

From the viewpoint of coloration suppression effect, in $R^8$ and $R^9$, the atoms bonded to the nitrogen atoms shown in the general formula (3) are further preferably secondary carbon atoms, and it is particularly preferable that both $R^8$ and $R^9$ are isopropyl groups or both $R^8$ and $R^9$ are cyclohexyl groups. That is, the compound represented by the general formula (3) is particularly preferably at least one selected from the group consisting of N,N'-diisopropylcarbodiimide and N,N'-dicyclohexylcarbodiimide.

Examples of the compound represented by the general formula (3) are shown below, but the compound is not limited thereto.

[Chem. 22]

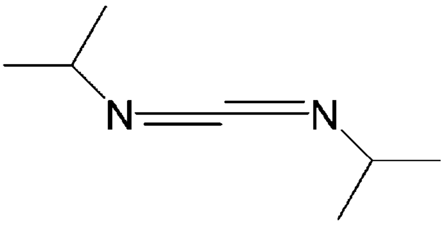

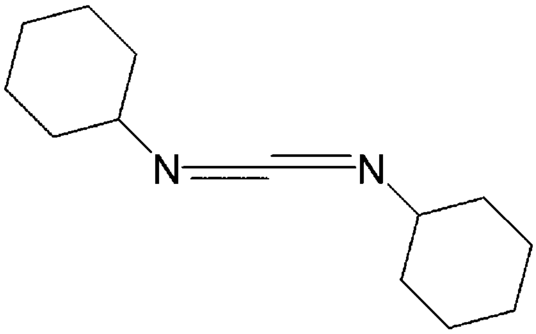

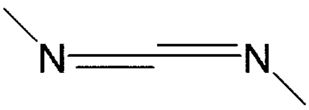

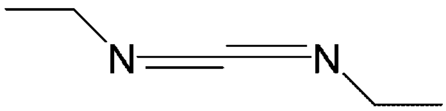

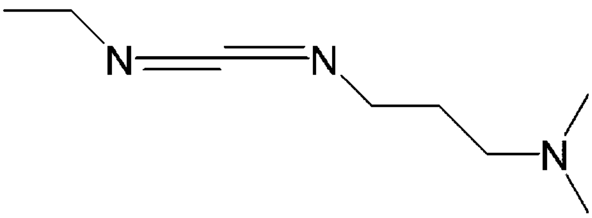

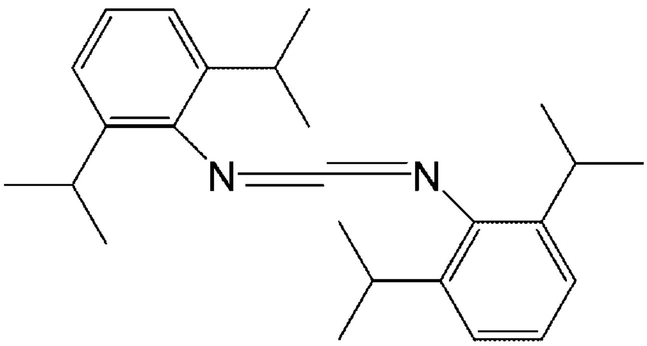

Of these, from the viewpoint of coloration suppression effect, (V) is preferably at least one compound selected from the group consisting of the nitrate salt and the compound represented by the general formula (2), and more preferably the compound represented by the general formula (2).

In the nonaqueous electrolyte solution of the present disclosure, one type of compound may be used alone as (V), or two or more types of compound may be mixed and used in any combination and any ratio according to the application.

In the nonaqueous electrolyte solution of the present disclosure, the content of (V) with respect to the total amount of the nonaqueous electrolyte solution (also referred to as "concentration of (V)") may be 0.005% by mass or more and 10% by mass or less. The lower limit of the concentration of (V) may be 0.008% by mass or more, may be 0.03% by mass or more, or may be 0.04% by mass or more. The upper limit of the concentration of (V) may be 5% by mass or less, may be 3% by mass or less, or may be 2% by mass or less.

Here, when (V) contains a nitrate salt, a content of the nitrate salt with respect to the total amount of the nonaqueous electrolyte solution is preferably 1% by mass or less from the viewpoint of solubility in the nonaqueous electrolyte solution.

In the nonaqueous electrolyte solution of the present disclosure, (V)/{ (III)+(IV)}, which is the mass ratio of the amount of (V) to the total amount of (III) and (IV), is 0.0040 or more. By setting the ratio to 0.0040 or more, a nonaqueous electrolyte solution capable of suppressing coloration when stored for a long period of time at room temperature (25°C) while maintaining excellent battery performance when used for a nonaqueous electrolyte solution battery can be obtained. When the ratio is less than 0.0040, the coloration suppression effect is not sufficiently exhibited.

From the viewpoint of improving the coloration suppression effect, the ratio is preferably 0.0100 or more, more preferably 0.0500 or more, further preferably 0.1000 or more, and particularly preferably 0.2500 or more. Moreover, the upper limit of the ratio is not particularly limited but is preferably 1.5000 or less from the viewpoint of efficiency of coloration suppression by the addition of (V). That is, (V)/{(III)+(IV)} is preferably 0.0100 to 1.5000.

<Other Additive>

The nonaqueous electrolyte solution of the present disclosure contains the above components as basic constituent components, but as long as the gist of the present disclosure is not impaired, another additive which is generally used in this technical field may be added to the nonaqueous electrolyte solution of the present disclosure at any ratio.

When the nonaqueous electrolyte solution of the present disclosure contains another additive, the content thereof may be 0.01% by mass or more and 10% by mass or less with respect to the total amount of the nonaqueous electrolyte solution.

Examples of the other additives include cyclohexylbenzene, cyclohexylfluorobenzene, biphenyl, 2-fluorobiphenyl, t-butylbenzene, t-amylbenzene, 2-fluorotoluene, fluorobenzene, vinylene carbonate (hereinafter, sometimes referred to as "VC"), an oligomer of vinylene carbonate (number average molecular weight in terms of polystyrene is 170 to 5000), vinylethylene carbonate, difluoroanisole, fluoroethylene carbonate (hereinafter, sometimes referred to as "FEC"), 1,6-diisocyanatohexane, ethynylethylene carbonate, trans-difluoroethylene carbonate, methyl propargyl carbonate, ethyl propargyl carbonate, dipropargyl carbonate, maleic anhydride, succinic anhydride, 1,3-propanesultone, 1,3-propenesultone, butanesultone, dimethylvinylene carbonate, 1,3,2-dioxathiolane-2,2-dioxide, 4-propyl-1,3,2-dioxathiolane-2,2-dioxide, methylene methanedisulfonate, dimethylene methanedisulfonate, trimethylene methanedisulfonate, methyl methanesulfonate, methanesulfonyl fluoride, ethenesulfonyl fluoride, phenyl difluorophosphate, 1,2-ethanedisulfonic anhydride, trivinylmethylsilane, trivinylfluorosilane, tetravinylsilane, tris(trimethylsilyl)borate, succinonitrile, (ethoxy)pentafluorocyclotriphosphazene, tetrafluoro(picolinato)phosphate, difluoro(picolinato)borate, 1,3-dimethyl-1,3-divinyl-1,3-di(1,1,1,3,3,3-hexafluoroisopropyl)disiloxane, lithium fluorosulfate, sodium fluorosulfate, lithium trifluoromethanesulfonate, sodium trifluoromethanesulfonate, lithium nonafluorobutanesulfonate, sodium nonafluorobutanesulfonate, lithium monofluorophosphate, sodium monofluorophosphate, lithium bis(trifluoromethanesulfonyl)imide, sodium bis(trifluoromethanesulfonyl)imide, lithium bis(pentafluoroethanesulfonyl)imide, sodium bis(pentafluoroethanesulfonyl)imide, lithium (trifluoromethanesulfonyl)(pentafluoroethanesulfonyl)imide, sodium (trifluoromethanesulfonyl)(pentafluoroethanesulfonyl)imide, lithium (trifluoromethanesulfonyl)(fluorosulfonyl)imide, sodium (trifluoromethanesulfonyl)(fluorosulfonyl)imide, lithium (pentafluoroethanesulfonyl)(fluorosulfonyl)imide, sodium (pentafluoroethanesulfonyl)(fluorosulfonyl) imide, lithium tris(trifluoromethanesulfonyl)methide, sodium tris(trifluoromethanesulfonyl)methide, carboxylate salts such as lithium acrylate, sodium acrylate, lithium methacrylate, and sodium methacrylate, and sulfate ester salts such as lithium methyl sulfate, sodium methyl sulfate, lithium ethyl sulfate, and sodium ethyl sulfate.

In a composition which contains fluoroethylene carbonate and which does not contain the above (V), it tends to be difficult to suppress coloration, but in a composition which contains fluoroethylene carbonate and which also contains the above (V), the coloration described above is easily suppressed.

Moreover, as the other additives, for example, at least one selected from the group consisting of vinylene carbonate, a difluorophosphate salt, a fluorosulfonate salt, 1,3-propenesultone, 1,3-propanesultone, 1,6-diisocyanatohexane, ethynylethylene carbonate, trans-difluoroethylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, methanesulfonic anhydride, methanesulfonyl fluoride, 1,4-dioxane-2,6-dione, tripropargyl phosphate, tris(trimethylsilyl)borate, (ethoxy)pentafluorocyclotriphosphazene, tetrafluoro(picolinato)phosphate, 1,3-dimethyl-1,3-divinyl-1,3-di(1,1,1,3,3,3-hexafluoroisopropyl) disiloxane, N,N'-carbonylbis(N-methylsulfamoylfluoride), tetravinylsilane, trivinylmethylsilane, t-butylbenzene, t-amylbenzene, fluorobenzene, and cyclohexylbenzene is preferably contained.

Here, the content of $LiN(CF_3SO_2)_2$, $LiCF_3SO_3$, $LiC_4F_9SO_3$, $NaN(CF_3SO_2)_2$, $NaCF_3SO_3$, or $NaC_4F_9SO_3$ with respect to the total amount of the nonaqueous electrolyte solution may be 0.01% by mass or more and 20% by mass or less.

In addition, as in the case of being used in a nonaqueous electrolyte solution battery referred to as a lithium polymer battery, the electrolyte solution for a nonaqueous electrolyte solution battery can be quasi-solidified with a gelling agent or a cross-linked polymer before use.

Moreover, when the other additive is an ionic salt, the cation thereof is more preferably a lithium ion for use for a lithium ion battery application and is more preferably a sodium ion for use for a sodium ion battery application.

The nonaqueous electrolyte solution of the present disclosure is suitably used for a nonaqueous electrolyte solution battery (preferably a nonaqueous electrolyte solution secondary battery).

## 2. Nonaqueous Electrolyte Solution Battery

The nonaqueous electrolyte solution battery of the present disclosure includes at least the nonaqueous electrolyte solution of the present disclosure described above, a negative electrode, and a positive electrode. Further, a separator, an exterior body, and the like may be included.

The nonaqueous electrolyte solution battery of the present disclosure preferably includes at least a positive electrode, a negative electrode, a separator, and the nonaqueous electrolyte solution of the present disclosure.

The nonaqueous electrolyte solution battery of the present disclosure is preferably a nonaqueous electrolyte solution secondary battery.

The negative electrode is not particularly limited, but a material capable of reversibly intercalating and deintercalating alkali metal ions such as lithium ions and sodium ions, or alkaline earth metal ions may be used.

For example, in the case of a lithium ion secondary battery in which cations are mainly lithium, the negative electrode active material constituting the negative electrode is one capable of doping and dedoping lithium ions. Examples of the negative electrode active material include a material containing at least one selected from a carbon material in which the d value of the lattice plane (002) plane in X-ray diffraction is 0.340 nm or less, a carbon material in which the d value of the lattice plane (002) plane in X-ray diffraction exceeds 0.340 nm, oxides of one or more metals selected from Si, Sn, and Al, one or more metals selected from Si, Sn, and Al, alloys containing these metals, alloys of the metals or the alloys and lithium, and lithium titanium oxide. One type of these negative electrode active materials can be used alone, or two or more types thereof can be used in combination. Lithium metal, a metal nitride, a tin compound, a conductive polymer, and the like may also be used.

For example, in the case of a sodium ion secondary battery in which the cations are mainly sodium, as the negative electrode active material constituting the negative electrode, sodium metal, an alloy of sodium metal and another metal such as tin, an intermetallic compound of sodium metal and another metal, various carbon materials such as hard carbon, a metal oxide such as titanium oxide, a metal nitride, (elemental) tin, a tin compound, activated carbon, a conductive polymer, and the like may be used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, and the like may be used. One type of these negative electrode active materials may be used alone, or two or more types thereof may be used in combination.

The positive electrode is not particularly limited, but a material capable of reversibly intercalating and deintercalating alkali metal ions such as lithium ions and sodium ions, or alkaline earth metal ions may be used.

For example, when the cation is lithium, lithium-containing transition metal oxide composites such as $LiCoO_2$, $LiNiO_2$, $LiMnO_2$, and $LiMn_2O_4$, lithium-containing transition metal oxide composites including a mixture of a plurality of transition metals in the lithium-containing transition metal oxide composites such as Co, Mn, and Ni, lithium-containing transition metal oxide composites in which a part of the transition metals in the lithium-containing transition metal oxide composites is substituted with a metal other than the transition metals, phosphate compounds of transition metals such as $LiFePO_4$, $LiCoPO_4$, and $LiMnPO_4$ referred to as olivine, oxides such as $TiO_2$, $V_2O_5$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like may be used as a positive electrode material.

Specific examples thereof include $Li[Ni_{1/3}Mn_{1/3}CO_{1/3}]O_2$, $Li[Ni_{0.45}Mn_{0.35}Co_{0.2}]O_2$, $Li[Ni_{0.5}Mn_{0.3}CO_{0.2}]O_2$, $Li[Ni_{0.6}Mn_{0.2}Co_{0.2}]O_2$, $Li[Ni_{0.8}Mn_{0.1}Co_{0.1}]O_2$ (hereinafter, sometimes referred to as "NCM811"), $Li[Ni_{0.49}Mn_{0.3}Co_{0.2}Zr_{0.01}]O_2$, $Li[Ni_{0.49}Mn_{0.3}Co_{0.2}Mg_{0.01}]O_2$, $LiNi_{0.8}Co_{0.2}O_2$, $LiNi_{0.35}Co_{0.10}Al_{0.05}O_2$, $LiNi_{0.87}Co_{0.10}Al_{0.03}O_2$, $LiNi_{0.96}Co_{0.07}Al_{0.03}O_2$, $LiNi_{0.6}Co_{0.3}Al_{0.1}O_2$, and $LiMn_{1.5}Ni_{0.5}O_4$.

For example, when the cation is sodium, sodium-containing transition metal oxide composites such as $NaCrO_2$, $NaFe_{0.5}Co_{0.5}O_2$, $NaFe_{0.4}Mn_{0.3}Ni_{0.3}O_2$, $NaNi_{0.5}Ti_{0.3}Mn_{0.2}O_2$, $NaNi_{1/3}Ti_{1/3}Mn_{1/3}O_2$, $NaNi_{0.33}Ti_{0.33}Mn_{0.16}Mg_{0.17}O_2$,

$Na_{2/3}Ni_{1/3}Ti_{1/6}Mn_{1/2}O_2$, and $Na_{2/3}Ni_{1/3}Mn_{2/3}O_2$, sodium-containing transition metal oxide composites including a mixture of a plurality of transition metals in the sodium-containing transition metal oxide composites such as Co, Mn, and Ni, sodium-containing transition metal oxide composites in which a part of the transition metals in the sodium-containing transition metal oxide composites is substituted with a metal other than the transition metals, polyanion type compounds such as $NaFePO_4$, $NaVPO_4F$, $Na_3V_2(PO_4)_3$, and $Na_2Fe_2(SO_4)_3$, sodium salts of Prussian Blue analogues represented by a compositional formula $Na_aM_b[Fe(CN)_6]_c$ (M represents Cr, Mn, Fe, Co, Ni, Cu, or Zn, $0 \leq a \leq 2$, $0.5 \leq b \leq 1.5$, and $0.5 \leq c \leq 1.5$), oxides such as $TiO_2$, $V_2O_5$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like may be used as a positive electrode material (positive electrode active material).

Acetylene black, Ketjen black, carbon fibers, or graphite as a conductive material, and polytetrafluoroethylene, polyvinylidene fluoride, SBR resin, or the like as a binder may be added to the positive electrode and negative electrode materials, and an electrode sheet molded into a sheet shape may also be used.

As a separator for preventing contact between the positive electrode and the negative electrode, a nonwoven fabric or a porous sheet made of polypropylene, polyethylene, paper, glass fibers, or the like may be used.

An electrochemical device having a shape such as a coin shape, a cylindrical shape, a rectangular shape, or an aluminum laminate sheet shape is assembled from the above elements.

## EXAMPLES

Hereinafter, the present disclosure will be specifically explained with Examples, but the present disclosure is not limited by these Examples.

The compounds of the components (III), the components (IV), and the components (V) used in the Examples and the Comparative Examples are shown below.

Component (III)

[Chem. 23]

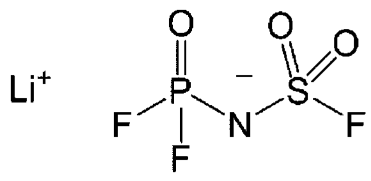

$LiN(SO_2F)(POF_2)$

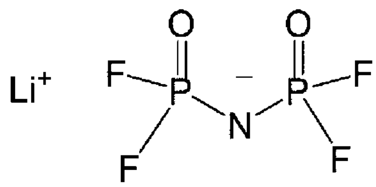

$LiN(POF_2)_2$

Component (IV)

LiDFOB: lithium difluoro(oxalato)borate
LiBOB: lithium bis(oxalato)borate
LiTFOP: lithium tetrafluoro(oxalato)phosphate
LiDFBOP: lithium difluorobis(oxalato)phosphate
LiTOP: lithium tris(oxalato)phosphate

Component (V)

$LiNO_3$: lithium nitrate

[Chem. 24]

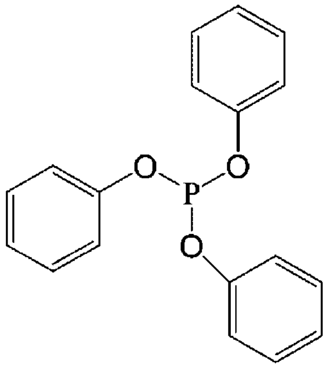

P(OPh)3

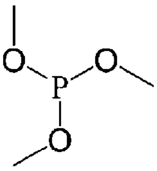

P(OMe)3

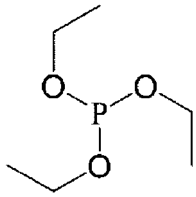

P(OEt)3

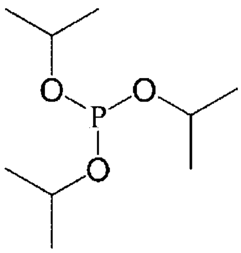

P(O-isoPr)3

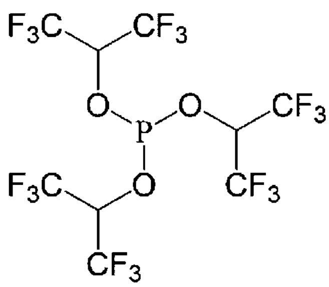

P(O-HFIP)3

[Chem. 25]

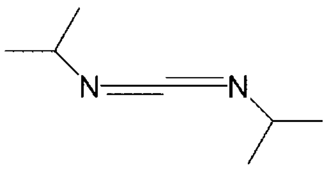

DIPCDI

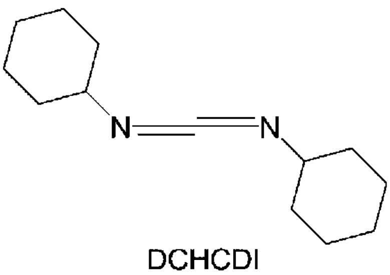

DCHCDI

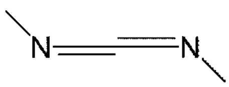

DMCDI

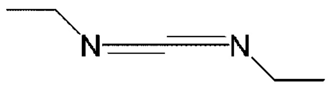

DECDI

[Comparative Examples 0-1 to 0-8 and Reference Examples 0-1 to 0-4]

<Preparation of Electrolyte Solutions Nos. 0-1 to 0-12>

A mixed solvent of ethylene carbonate (hereinafter, referred to as "EC"), dimethyl carbonate (hereinafter, referred to as "DMC"), and ethyl methyl carbonate (hereinafter, referred to as "EMC") at a volume ratio of 3:3:4 was used as (II), and lithium hexafluorophosphate (hereinafter, referred to as "$LiPF_6$") as (I) at a content of 1.0 mol/L, $LiN(SO_2F)(POF_2)$ or $LiN(POF_2)_2$ as (III) at a content shown in Table 1, LiBOB, LiDFOB, LiTFOP, LiDFBOP, or LiTOP as (IV) at a content shown in Table 1, and fluoroethylene carbonate (hereinafter, referred to as "FEC") at a content shown in Table 1 were dissolved in the solvent to prepare the electrolyte solutions Nos. 0-1 to 0-12. The above preparation was performed while maintaining the liquid temperature at 25°C.

[Examples 1-1 to 1-16 and Comparative Examples 1-1 to 1-19]

<Preparation of Electrolyte Solutions Nos. 1-1 to 1-36>

The electrolyte solutions Nos. 1-1 to 1-36 were prepared by the same procedure as that of the nonaqueous electrolyte solutions according to Table 1 except that the components described above were changed as shown in Table 2 and that $LiNO_3$ as (V) was dissolved at the contents shown in Table 2.

[Examples 2-1 to 2-22 and Comparative Examples 2-1 to 2-27]

<Preparation of Electrolyte Solutions Nos. 2-1 to 2-49>

The electrolyte solutions Nos. 2-1 to 2-49 were prepared by the same procedure as that of the nonaqueous electrolyte solutions according to Table 1 except that the components described above were changed as shown in Table 3 and that $P(OPh)_3$, $P(OMe)_3$, $P(OEt)_3$, $P(O\text{-}isoPr)_3$, or $P(O\text{-}HFIP)_3$ as (V) was dissolved in an amount shown in Table 3.

[Examples 3-1 to 3-21 and Comparative Examples 3-1 to 3-25]

<Preparation of Electrolyte Solutions Nos. 3-1 to 3-46>

The electrolyte solutions Nos. 3-1 to 3-46 were prepared by the same procedure as that of the nonaqueous electrolyte solutions according to Table 1 except that the components described above were changed as shown in Table 4 and that DIPCDI, DCHCDI, DMCDI, or DECDI as (V) was dissolved in an amount shown in Table 4.

[Storage Test at 25°C of Nonaqueous Electrolyte Solutions]

Each of the prepared nonaqueous electrolyte solutions was placed in a sealed container and stored in an environment of 25°C to obtain the nonaqueous electrolyte solutions according to the Examples, the Comparative Examples, and the Reference Examples.

[Evaluation of Coloration of Nonaqueous Electrolyte Solutions after Storage at 25°C]

The degrees of coloration of the nonaqueous electrolyte solutions were measured as Hazen color numbers (APHA) using a color tester. The APHA values at the initial stage (namely, after preparation before storage), after storage for one month, after storage for two months, and after storage for four months are shown in Tables 1 to 4.

[Table 1]

Table 1

| | Electrolyte Solution No. | Compound (III) | | Compound (IV) | | Compound (V) | | FEC (% by mass) | (V)/(III)+(IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Months |
| Comparative Example 0-1 | 0-1 | $LiN(SO_2F)(POF_2)$ | 1 | LiBOB | 1 | - | - | - | 0.0000 | 13 | 51 | 99 | 260 |
| Comparative Example 0-2 | 0-2 | $LiN(SO_2F)(POF_2)$ | 1 | LiBOB | 1 | - | - | 5 | 0.0000 | 13 | 130 | 310 | 800 |
| Comparative Example 0-3 | 0-3 | $LiN(SO_2F)(POF_2)$ | 1 | LiDFOB | 1 | - | - | 5 | 0.0000 | 10 | 110 | 290 | 760 |
| Comparative Example 0-4 | 0-4 | $LiN(SO_2F)(POF_2)$ | 1 | LiTFOP | 1 | - | - | 5 | 0.0000 | 12 | 100 | 280 | 730 |
| Comparative Example 0-5 | 0-5 | $LiN(SO_2F)(POF_2)$ | 1 | LiDFBOP | 1 | - | - | 5 | 0.0000 | 13 | 90 | 260 | 670 |
| Comparative Example 0-6 | 0-6 | $LiN(SO_2F)(POF_2)$ | 1 | LiTOP | 1 | - | - | 5 | 0.0000 | 12 | 110 | 280 | 700 |
| Reference Example 0-1 | 0-7 | $LiN(SO_2F)(POF_2)$ | 1 | - | - | - | - | - | 0.0000 | 11 | 28 | 29 | 31 |
| Reference Example 0-2 | 0-8 | - | - | LiBOB | 1 | - | - | - | 0.0000 | 13 | 26 | 26 | 28 |
| Reference Example 0-3 | 0-9 | - | - | - | - | - | - | - | 0.0000 | 12 | 26 | 27 | 28 |
| Comparative Example 0-7 | 0-10 | $LiN(POF_2)_2$ | 1 | LiBOB | 1 | - | - | - | 0.0000 | 12 | 48 | 110 | 280 |
| Comparative Example 0-8 | 0-11 | $LiN(POF_2)_2$ | 1 | LiBOB | 1 | - | - | 5 | 0.0000 | 13 | 95 | 270 | 780 |
| Reference Example 0-4 | 0-12 | $LiN(POF_2)_2$ | 1 | - | - | - | - | - | 0.0000 | 10 | 27 | 29 | 31 |

[Table 2]

Table 2

| | Electrolyte Solution No. | Compound (III) | | Compound (IV) | | Compound (V) | | FEC (% by mass) | M/(III)+(IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Months |
| Comparative Example 1-1 | 1-1 | $LiN(SO_2F)(POF_2)$ | 1 | LiBOB | 1 | $LiNO_3$ | 0.001 | - | 0.0005 | 12 | 44 | 86 | 220 |
| Example 1-1 | 1-2 | | | | | | 0.01 | | 0.0050 | 11 | 21 | 41 | 76 |
| Example 1-2 | 1-3 | | | | | | 0.05 | | 0.0250 | 13 | 18 | 32 | 59 |
| Example 1-3 | 1-4 | | | | | | 0.1 | | 0.0500 | 12 | 16 | 24 | 48 |
| Example 1-4 | 1-5 | | | | | | 0.5 | | 02500 | 13 | 14 | 16 | 22 |
| Example 1-5 | 1-6 | | 0.2 | | 02 | | 0.02 | | 0.0500 | 11 | 14 | 18 | 24 |
| Example 1-6 | 1-7 | | 0.2 | | 02 | | 0.5 | | 12500 | 12 | 13 | 15 | 22 |
| Comparative Example 1-2 | 1-8 | | 3 | | 1 | | 0.01 | | 0.0025 | 11 | 34 | 72 | 150 |
| Comparative Example 1-3 | 1-9 | | 1 | | 3 | | 0.01 | | 0.0025 | 12 | 39 | 80 | 180 |
| Comparative Example 1-4 | 1-10 | | 2 | | 2 | | 0.01 | | 0.0025 | 12 | 38 | 78 | 160 |
| Comparative Example 1-5 | 1-11 | | 3 | | 3 | | 0.01 | | 0.0017 | 13 | 43 | 84 | 200 |
| Example 1-7 | 1-12 | | 3 | | 1 | | 0.1 | | 0.0250 | 11 | 18 | 30 | 60 |
| Example 1-8 | 1-13 | | 1 | | 3 | | 0.1 | | 0.0250 | 11 | 21 | 35 | 66 |
| Example 1-9 | 1-14 | | 2 | | 2 | | 0.1 | | 0.0250 | 13 | 20 | 33 | 62 |
| Example 1-10 | 1-15 | | 3 | | 3 | | 0.1 | | 0.0167 | 12 | 24 | 40 | 70 |
| Comparative Example 1-6 | 1-16 | | 1 | LiBOB | 1 | | 0.001 | 5 | 0.0005 | 12 | 90 | 230 | 400 |
| Example 1-11 | 1-17 | | 1 | | 1 | | 0.1 | | 0.0500 | 11 | 23 | 39 | 84 |
| Comparative Example 1-7 | 1-18 | | 2 | | 2 | | 0.01 | | 0.0025 | 13 | 55 | 120 | 270 |

[Table 3]

Table 2 (continued)

| | Electrolyte Solution No. | Compound (III) | | Compound (IV) | | Compound M | | FEC (% by mass) | (V)(III)+(IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Mounths |
| Comparative Example 1-8 | 1-19 | $LiN(SO_2F)(POF_2)$ | 1 | LiDFOB | 1 | $LiNO_3$ | 0.001 | 5 | 0.0005 | 11 | 83 | 200 | 380 |
| Example 1-12 | 1-20 | | 1 | | 1 | | 0.1 | | 0.0500 | 13 | 24 | 38 | 77 |
| Comparative Example 1-9 | 1-21 | | 2 | | 2 | | 0.01 | | 0.0025 | 12 | 49 | 100 | 230 |
| Comparative Example 1-10 | 1-22 | | 1 | LiTFOP | 1 | | 0.001 | | 0.0005 | 12 | 84 | 190 | 360 |
| Example 1-13 | 1-23 | | 1 | | 1 | | 0.1 | | 0.0500 | 13 | 25 | 34 | 75 |
| Comparative Example 1-11 | 1-24 | | 2 | | 2 | | 0.01 | | 0.0025 | 11 | 46 | 95 | 190 |
| Comparative Example 1-12 | 1-25 | | 1 | LiDFBOP | 1 | | 0.001 | | 0.0005 | 11 | 77 | 160 | 330 |
| Example 1-14 | 1-26 | | 1 | | 1 | | 0.1 | | 0.0500 | 12 | 23 | 35 | 78 |
| Comparative Example 1-13 | 1-27 | | 2 | | 2 | | 0.01 | | 0.0025 | 13 | 41 | 89 | 170 |
| Comparative Example 1-14 | 1-28 | | 1 | LiTOP | 1 | | 0.001 | | 0.0005 | 11 | 80 | 180 | 350 |
| Example 1-17 | 1-29 | | 1 | | 1 | | 0.1 | | 0.0500 | 10 | 22 | 30 | 72 |
| Comparative Example 1-15 | 1-30 | | 2 | | 2 | | 0.01 | | 0.0025 | 13 | 44 | 92 | 190 |

(continued)

Table 2 (continued)

| | Electrolyte Solution No. | Compound (III) | | Compound (IV) | | Compound M | | FEC (% by mass) | (V)(III)+(IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Mounths |
| Comparative Example 1-16 | 1-31 | $LiN(POF_2)_2$ | 1 | LiBOB | 1 | | 0.001 | - | 0.0005 | 12 | 44 | 86 | 220 |
| Example 1-15 | 1-32 | | 1 | | 1 | | 0.1 | | 0.0500 | 13 | 17 | 28 | 54 |
| Comparative Example 1-17 | 1-33 | | 2 | | 2 | | 0.01 | | 0.0025 | 12 | 43 | 76 | 160 |
| Comparative Example 1-18 | 1-34 | | 1 | | 1 | | 0.001 | 5 | 0.0005 | 11 | 87 | 210 | 370 |
| Example 1-16 | 1-35 | | 1 | | 1 | | 0.1 | | 0.0500 | 13 | 27 | 40 | 89 |
| Comparative Example 1-19 | 1-36 | | 2 | | 2 | | 0.01 | | 0.0025 | 11 | 45 | 90 | 170 |

[Table 4]

Table 3

| | Electrolyte Solution No. | Compound (III) | | Compound (IV) | | Compound (V) | | FEC (% by mass) | (V)/(III+(IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Months |
| Comparative Example 2-1 | 2-1 | $LiN(SO_2F)(POF_2)$ | 1 | LiBOB | 1 | $P(OPh)_3$ | 0.001 | - | 0.0005 | 12 | 41 | 81 | 190 |
| Example 2-1 | 2-2 | | | | | | 0.01 | | 0.0050 | 12 | 20 | 36 | 62 |
| Example 2-2 | 2-3 | | | | | | 0.05 | | 0.0250 | 13 | 16 | 26 | 51 |
| Example 2-3 | 2-4 | | | | | | 0.1 | | 0.0500 | 11 | 16 | 22 | 41 |
| Example 2-4 | 2-5 | | | | | | 0.5 | | 02500 | 10 | 13 | 13 | 18 |
| Example 2-5 | 2-6 | | 0.2 | | 0.2 | | 0.02 | | 0.0500 | 11 | 14 | 16 | 22 |
| Example 2-6 | 2-7 | | 0.2 | | 0.2 | | 0.5 | | 12500 | 12 | 13 | 14 | 20 |
| Conparative Example 2-2 | 2-8 | | 3 | | 1 | | 0.01 | | 0.0025 | 14 | 33 | 69 | 140 |
| Conparative Example 2-3 | 2-9 | | 1 | | 3 | | 0.01 | | 0.0025 | 12 | 39 | 78 | 170 |
| Comparative Example 2-4 | 2-10 | | 2 | | 2 | | 0.01 | | 0.0025 | 12 | 38 | 77 | 160 |
| Comparative Example 2-5 | 2-11 | | 3 | | 3 | | 0.01 | | 0.0017 | 13 | 43 | 81 | 190 |
| Example 2-7 | 2-12 | | 3 | | 1 | | 0.1 | | 0.0250 | 11 | 18 | 29 | 57 |
| Example 2-8 | 2-13 | | 1 | | 3 | | 0.1 | | 0.0250 | 12 | 20 | 35 | 64 |
| Example 2-9 | 2-14 | | 2 | | 2 | | 0.1 | | 0.0250 | 13 | 20 | 33 | 63 |
| Example 2-10 | 2-15 | | 3 | | 3 | | 0.1 | | 0.0167 | 12 | 23 | 39 | 69 |
| Example 2-11 | 2-16 | | 3 | | 3 | | 7.5 | | 12500 | 12 | 13 | 14 | 17 |

(continued)

Table 3

| | Electrolyte Solution No. | Compound (III) | | Compound (IV) | | Compound (V) | | FEC (% by mass) | (V)/(III+(IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Months |
| Comparative Example 2-6 | 2-17 | | 1 | LiBOB | 1 | | 0.001 | 5 | 0.0005 | 12 | 81 | 230 | 350 |
| Example 2-12 | 2-18 | | 1 | | 1 | | 0.1 | | 0.0500 | 12 | 21 | 34 | 71 |
| Conparative Example 2-7 | 2-19 | | 2 | | 2 | | 0.01 | | 0.0025 | 13 | 51 | 110 | 250 |
| Comparative Example 2-8 | 2-20 | | 1 | LiDFOB | 1 | | 0.001 | | 0.0005 | 12 | 80 | 180 | 360 |
| Example 2-13 | 2-21 | | 1 | | 1 | | 0.1 | | 0.0500 | 13 | 23 | 38 | 69 |
| Comparative Example 2-9 | 2-22 | | 2 | | 2 | | 0.01 | | 0.0025 | 12 | 45 | 93 | 230 |
| Comparative Example 2-10 | 2-23 | | 1 | UTFOP | 1 | | 0.001 | | 0.0005 | 11 | 81 | 190 | 360 |
| Example 2-14 | 2-24 | | 1 | | 1 | | 0.1 | | 0.0500 | 12 | 20 | 33 | 66 |
| Comparative Example 2-11 | 2-25 | | 2 | | 2 | | 0.01 | | 0.0025 | 13 | 42 | 89 | 170 |

[Table 5]

Table 3 (continued)

| | Electrolyte Solution No. | Compound (III) | | Compound (IV) | | Compound (V) | | FEC (% by mass) | (V)/(III)+(IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Months |
| Comparative Example 2-12 | 2-26 | $LiN(SO_2F)(POF_2)$ | 1 | LiDFBOP | 1 | $P(OPh)_3$ | 0.001 | 5 | 0.0005 | 11 | 71 | 150 | 310 |
| Example 2-15 | 2-27 | | 1 | | 1 | | 0.1 | | 0.0500 | 10 | 19 | 30 | 64 |
| Comparative Example 2-13 | 2-28 | | 2 | | 2 | | 0.01 | | 0.0025 | 12 | 39 | 84 | 160 |
| Comparative Example 2-14 | 2-29 | | 1 | LiTOP | 1 | | 0.001 | | 0.0005 | 11 | 76 | 160 | 320 |
| Example 2-16 | 2-30 | | 1 | | 1 | | 0.1 | | 0.0500 | 11 | 19 | 31 | 67 |
| Comparative Example 2-15 | 2-31 | | 2 | | 2 | | 0.01 | | 0.0025 | 13 | 43 | 90 | 190 |
| Comparative Example 2-16 | 2-32 | | 1 | LiBOB | 1 | $P(OMe)_3$ | 0.001 | | 0.0005 | 11 | 89 | 250 | 390 |
| Example 2-17 | 2-33 | | 1 | | 1 | | 0.1 | | 0.0500 | 11 | 26 | 41 | 81 |
| Comparative Example 2-17 | 2-34 | | 2 | | 2 | | 0.01 | | 0.0025 | 12 | 46 | 110 | 230 |
| Comparative Example 2-18 | 2-35 | | 1 | | 1 | $P(OEt)_3$ | 0.001 | | 0.0005 | 12 | 88 | 260 | 390 |
| Example 2-18 | 2-36 | | 1 | | 1 | | 0.1 | | 0.0500 | 13 | 25 | 39 | 77 |
| Comparative Example 2-19 | 2-37 | | 2 | | 2 | | 0.01 | | 0.0025 | 12 | 45 | 110 | 240 |
| Comparative Example 2-20 | 2-38 | | 1 | | 1 | $P(O\text{-}isoPr)_3$ | 0.001 | | 0.0005 | 12 | 82 | 230 | 360 |
| Example 2-19 | 2-39 | | 1 | | 1 | | 0.1 | | 0.0500 | 12 | 22 | 36 | 75 |
| Comparative Example 2-21 | 2-40 | | 2 | | 2 | | 0.01 | | 0.0025 | 11 | 40 | 93 | 210 |

(continued)

Table 3 (continued)

| | Electrolyte Solution No. | Compound (III) | | Compound (IV) | | Compound (V) | | FEC (% by mass) | (V)/(III)+(IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Months |
| Comparative Example 2-22 | 2-41 | | 1 | | 1 | $P(O\text{-}HFIP)_3$ | 0.001 | | 0.0005 | 12 | 79 | 210 | 340 |
| Example 2-20 | 2-42 | | 1 | | 1 | $P(O\text{-}HFIP)_3$ | 0.1 | | 0.0500 | 13 | 21 | 35 | 74 |
| Comparative Example 2-23 | 2-43 | | 2 | | 2 | $P(O\text{-}HFIP)_3$ | 0.01 | | 0.0025 | 11 | 38 | 91 | 190 |
| Comparative Example 2-24 | 2-44 | $LiN(POF_2)_2$ | 1 | LiBOB | 1 | $P(OPh)_3$ | 0.001 | - | 0.0005 | 12 | 43 | 86 | 230 |
| Example 2-21 | 2-45 | $LiN(POF_2)_2$ | 1 | LiBOB | 1 | $P(OPh)_3$ | 0.1 | - | 0.0500 | 12 | 17 | 24 | 44 |
| Comparative Example 2-25 | 2-46 | $LiN(POF_2)_2$ | 2 | LiBOB | 2 | $P(OPh)_3$ | 0.01 | - | 0.0025 | 12 | 38 | 71 | 150 |
| Comparative Example 2-26 | 2-47 | $LiN(POF_2)_2$ | 1 | LiBOB | 1 | $P(OPh)_3$ | 0.001 | 5 | 0.0005 | 12 | 86 | 220 | 350 |
| Example 2-22 | 2-48 | $LiN(POF_2)_2$ | 1 | LiBOB | 1 | $P(OPh)_3$ | 0.1 | 5 | 0.0500 | 13 | 23 | 36 | 74 |
| Comparative Example 2-27 | 2-49 | $LiN(POF_2)_2$ | 2 | LiBOB | 2 | $P(OPh)_3$ | 0.01 | 5 | 0.0025 | 11 | 44 | 91 | 190 |

[Table 6]

Table 4

| | Electrolyte Solution No. | Compound (III) | | Compound (IV) | | Compound (V) | | FEC (% by mass) | (V)/(III)+(IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Months |
| Comparative Example 3-1 | 3-1 | $LiN(SO_2F)(POF_2)$ | 1 | LBOB | 1 | DIPCDI | 0.001 | | 0.0005 | 12 | 43 | 92 | 210 |
| Example 3-1 | 3-2 | | | | | | 0.01 | | 0.0050 | 12 | 24 | 41 | 82 |
| Example 3-2 | 3-3 | | | | | | 0.05 | | 0.0250 | 13 | 21 | 34 | 61 |
| Example 3-3 | 3-4 | | | | | | 0.1 | | 0.0500 | 11 | 18 | 24 | 47 |
| Example 3-4 | 3-5 | | | | | | 0.5 | | 0.2500 | 10 | 14 | 17 | 24 |
| Example 3-5 | 3-6 | | 0.2 | | 0.2 | | 0.02 | | 0.0500 | 13 | 15 | 17 | 25 |
| Example 3-6 | 3-7 | | 0.2 | | 0.2 | | 0.5 | | 1.2500 | 12 | 15 | 16 | 24 |
| Conparative Example 3-2 | 3-8 | | 3 | | 1 | | 0.01 | | 0.0025 | 11 | 35 | 74 | 160 |
| Comparative Example 3-3 | 3-9 | | 1 | | 3 | | 0.01 | | 0.0025 | 13 | 39 | 81 | 200 |
| Comparative Example 3-4 | 3-10 | | 2 | | 2 | | 0.01 | | 0.0025 | 12 | 36 | 77 | 170 |
| Comparative Example 3-5 | 3-11 | | 3 | | 3 | | 0.01 | | 0.0017 | 12 | 45 | 89 | 230 |
| Example 3-7 | 3-12 | | 3 | | 1 | | 0.1 | | 0.0250 | 11 | 19 | 33 | 64 |
| Example 3-8 | 3-13 | | 1 | | 3 | | 0.1 | | 0.0250 | 12 | 22 | 36 | 71 |
| Example 3-9 | 3-14 | | 2 | | 2 | | 0.1 | | 0.0250 | 11 | 20 | 33 | 66 |
| Example 3-10 | 3-15 | | 3 | | 3 | | 0.1 | | 0.0167 | 12 | 24 | 43 | 76 |
| Example 3-11 | 3-16 | | 3 | | 3 | | 7.5 | | 1.2500 | 14 | 14 | 16 | 20 |

(continued)

Table 4

| | Electrolyte Solution No. | Compound (III) | | Compound (IV) | | Compound (V) | | FEC (% by mass) | (V)/(III)+(IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Months |
| Comparative Example 3-6 | 3-17 | | 1 | | 1 | | 0.001 | | 0.0005 | 12 | 93 | 240 | 410 |
| Example 3-12 | 3-18 | | 1 | LiBOB | 1 | | 0.1 | | 0.0500 | 12 | 23 | 39 | 71 |
| Comparative Example 3-7 | 3-19 | | 2 | | 2 | | 0.01 | 5 | 0.0025 | 11 | 56 | 120 | 280 |
| Comparative Example 3-8 | 3-20 | | 1 | | 1 | | 0.001 | | 0.0005 | 11 | 87 | 220 | 390 |
| Example 3-13 | 3-21 | | 1 | LiDFOB | 1 | | 0.1 | | 0.0500 | 13 | 25 | 44 | 73 |
| Comparative Example 3-9 | 3-22 | | 2 | | 2 | | 0.01 | | 0.0025 | 13 | 49 | 98 | 230 |

[Table 7]

Table 4 (continued)

| | Electrolyte Solution No. | Compound (III) | | Compound (IV) | | Compound (V) | | FEC (% by mass) | (V)/(III)+IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Months |
| Comparative Example 3-10 | 3-23 | $LiN(SO_2F)(POF_2)$ | 1 | LiTFOP | 1 | DIPCDI | 0.001 | 5 | 0.0005 | 11 | 82 | 180 | 350 |
| Example 3-14 | 3-24 | | 1 | | 1 | | 0.1 | | 0.0500 | 10 | 24 | 43 | 77 |
| Comparative Example 3-11 | 3-25 | | 2 | | 2 | | 0.01 | | 0.0025 | 12 | 45 | 94 | 190 |
| Comparative Example 3-12 | 3-26 | | 1 | LiDFBOP | 1 | | 0.001 | | 0.0005 | 11 | 79 | 170 | 340 |
| Example 3-15 | 3-27 | | 1 | | 1 | | 0.1 | | 0.0500 | 11 | 21 | 39 | 68 |
| Comparative Example 3-13 | 3-28 | | 2 | | 2 | | 0.01 | | 0.0025 | 11 | 39 | 87 | 170 |
| Comparative Example 3-14 | 3-29 | | 1 | LiTOP | 1 | | 0.001 | | 0.0005 | 12 | 81 | 180 | 330 |
| Example 3-16 | 3-30 | | 1 | | 1 | | 0.1 | | 0.0500 | 13 | 23 | 41 | 76 |
| Comparative Example 3-15 | 3-31 | | 2 | | 2 | | 0.01 | | 0.0025 | 13 | 42 | 93 | 190 |
| Comparative Example 3-16 | 3-32 | | 1 | LiBOB | 1 | DCHCDI | 0.001 | | 0.0005 | 12 | 88 | 210 | 380 |
| Example 3-17 | 3-33 | | 1 | | 1 | | 0.1 | | 0.0500 | 12 | 24 | 41 | 72 |
| Comparative Example 3-17 | 3-34 | | 2 | | 2 | | 0.01 | | 0.0025 | 10 | 51 | 100 | 250 |
| Comparative Example 3-18 | 3-35 | | 1 | | 1 | DMCDI | 0.001 | | 0.0005 | 13 | 101 | 240 | 420 |
| Example 3-18 | 3-36 | | 1 | | 1 | | 0.1 | | 0.0500 | 11 | 33 | 55 | 96 |
| Comparative Example 3-19 | 3-37 | | 2 | | 2 | | 0.01 | | 0.0025 | 11 | 64 | 130 | 290 |

(continued)

Table 4 (continued)

| | Electrolyte Solution No. | Compound (III) | | Compound (IV) | | Compound (V) | | FEC (% by mass) | (V)/(III)+IV) | Hue (APHA) after Storage at 25°C | | | |
|---|---|---|---|---|---|---|---|---|---|---|---|---|---|
| | | Compound | Addition Amount (% by mass) | Compound | Addition Amount (% by mass) | Compound | Addition Amount (% by mass) | | | Initial Stage | One Month | Two Months | Four Months |
| Comparative Example 3-20 | 3-38 | LiN($POF_2$)$_2$ | 1 | LiBOB | 1 | DECDI | 0.001 | | 0.0005 | 12 | 110 | 270 | 480 |
| Example 3-19 | 3-39 | | 1 | | 1 | | 0.1 | | 0.0500 | 13 | 36 | 61 | 98 |
| Comparative Example 3-21 | 3-40 | | 2 | | 2 | | 0.01 | | 0.0025 | 13 | 69 | 140 | 310 |
| Comparative Example 3-22 | 3-41 | | 1 | | 1 | DIPCDI | 0.001 | - | 0.0005 | 12 | 46 | 95 | 240 |
| Example 3-20 | 3-42 | | 1 | | 1 | | 0.1 | | 0.0500 | 11 | 20 | 25 | 49 |
| Comparative Example 3-23 | 3-43 | | 2 | | 2 | | 0.01 | | 0.0025 | 12 | 41 | 81 | 170 |
| Comparative Example 3-24 | 3-44 | | 1 | | 1 | | 0.001 | 5 | 0.0005 | 11 | 92 | 200 | 380 |
| Example 3-21 | 3-45 | | 1 | | 1 | | 0.1 | | 0.0500 | 12 | 20 | 38 | 69 |
| Comparative Example 3-25 | 3-46 | | 2 | | 2 | | 0.01 | | 0.0025 | 13 | 45 | 93 | 190 |

<Reference Examples 0-1 to 0-3>

It was found that the electrolyte solution 0-9, which did not certain (III) an (IV), was not colored even after storage at 25°C for four months.

It was also found that the electrolyte solution 0-7, which contained (III) but did not contain (IV), was not colored even after storage at 25°C for four months.

It was also found that the electrolyte solution 0-8, which did not contain (III) but contained (IV), was not colored even after storage at 25°C for four months.

<Comparative Examples 0-1 to 0-6>

On the other hand, it was found that the coloration progressed by storage at 25°C in the electrolyte solutions 0-1 to 0-6, which contained (III) and (IV), regardless of the type of (IV) or the presence or absence of FEC. This result shows that the stability of a nonaqueous electrolyte solution containing both (III) and (IV) is inferior to that of a general electrolyte solution which does not contain (III) and (IV) (for example, corresponding to the electrolyte solution composition of the Comparative Example of Patent Literature 4).

<Reference Example 0-4 and Comparative Examples 0-7 and 0-8>

The above tendency was the same when the type of (III) was changed.

<Examples 1-1 to 1-16 and Comparative Examples 1-1 to 1-19>

<Examples 2-1 to 2-22 and Comparative Examples 2-1 to 2-27>

<Examples 3-1 to 3-21 and Comparative Examples 3-1 to 3-25>

It was found that when (III) to (V) are contained and when the value of (V)/{ (III)+(IV)} is 0.0040 or more, coloration can be suppressed even after storage at 25°C for four months.

On the other hand, it was found that when the value of (V)/{ (III)+(IV)} is less than 0.0040 although (III) to (V) are contained, coloration cannot be suppressed but progresses during storage at 25°C.

[Evaluation of Battery Characteristics]

[Production of Nonaqueous Electrolyte Solution Battery]

(Production of NCM811 Positive Electrode)

In 92.0% by mass of $LiNi_{0.8}Mn_{0.1}Co_{0.1}O_2$ powder, 3.5% by mass of polyvinylidene fluoride (hereinafter also referred to as "PVDF") as a binder and 4.5% by mass of acetylene black as a conductive material were mixed, and 45% by mass of N-methylpyrrolidone (hereinafter, sometimes referred to as "NMP") with respect to the total mass of the $LiNi_{0.8}Mn_{0.1}Co_{0.1}O_2$ powder, the binder, and the conductive material was added to produce a positive electrode mixture paste. The paste was applied onto both sides of an aluminum foil (A1085), dried, pressed and then punched into 4 cm × 5 cm to obtain an NCM811 positive electrode for testing.

(Production of Silicon-Containing Graphite Negative Electrode)

By mixing 7% by mass of nanosilicon, 3% by mass of a conductive material (HS-100 manufactured by Denka Company Limited), 2% by mass of carbon nanofiber (VGCF manufactured by Showa Denko K.K.), 2% by mass of styrene-butadiene rubber (hereinafter sometimes referred to as "SBR"), 1% by mass of carboxymethyl cellulose (hereinafter sometimes referred to as "CMC"), and water in 85% by mass of artificial graphite powder, a negative electrode mixture paste was produced. The paste was applied onto a copper foil, dried, pressed and then punched into 4.5 cm × 5.5 cm to obtain a silicon-containing graphite negative electrode for testing.

(Production of Nonaqueous Electrolyte Solution Battery)

Under an argon atmosphere at a dew point of -50°C or lower, a terminal was welded to the above NCM811 positive electrode, and both sides of the positive electrode (with the terminal welded thereto) were then sandwiched

between two polyethylene separators (5 cm × 6 cm). Further, the outside of the sandwiched product was sandwiched between two natural graphite negative electrodes to which a terminal had been welded in advance in such a manner that the surface of the negative electrode active material faced the surface of the positive electrode active material. The resultant product was put in an aluminum laminated bag having an opening on one side, and after the nonaqueous electrolyte solution was vacuum-injected into the bag, the opening was sealed with heat. In this manner, the aluminum laminated nonaqueous electrolyte solution batteries according to the Examples, the Comparative Examples, and the Reference Examples in Table 5 were produced.

[Evaluation]

<Initial Charge and Discharge Test>

First, the produced cell was conditioned at an ambient temperature of 25°C under the following conditions. That is, as an initial charge and discharge test, a charge and discharge cycle including constant-current constant-voltage charging at an upper limit charge voltage of 4.2 V and at 5 mA, constant-current discharging at 10 mA to a discharge end voltage of 2.5 V, subsequent constant-current constant-voltage charging at an upper limit charge voltage of 4.2 V and at 10 mA, and constant-current discharging at 10 mA to a discharge end voltage of 2.5 V was repeated three times. The discharge capacity in the third cycle was defined as the initial discharge capacity.

<Cycle Test (60°C)>

The nonaqueous electrolyte solution battery after the completion of the initial charge and discharge test was discharged at a constant current of 10 mA to a discharge end voltage of 2.5 V at an ambient temperature of 25°C and allowed to stand at an ambient temperature of 60°C for three hours. Thereafter, the battery was subjected to constant-current constant-voltage charging at an upper limit charge voltage of 4.2 V and at 75 mA and constant-current discharging at 75 mA to a discharge end voltage of 2.5 V. The charging and discharging at 75 mA in an environment at 60°C were repeated 500 cycles. Thereafter, the battery was allowed to stand at an ambient temperature of 25°C for three hours and subjected to constant-current constant-voltage charging at an upper limit charge voltage of 4.2 V and at 10 mA and constant-current discharging at 10 mA to a discharge end voltage of 2.5 V. The discharge capacity thereof was defined as the discharge capacity after the cycle test.

<Evaluation of Cycle Retention Rate>

The capacity retention rate after the cycle test was determined by the following equation. A larger value thereof means better high-temperature cycle characteristics.

Capacity retention rate (%) after cycle test = (discharge capacity after cycle test/initial discharge capacity) × 100

<Measurement of Internal Resistance>

The nonaqueous electrolyte solution battery before and after the cycle test at 60°C was charged at a constant current of 10 mA for 150 minutes at an ambient temperature of 25°C and discharged at a predetermined constant current value (5 mA, 10 mA, 25 mA, 50 mA, and 100 mA) for 10 seconds. The voltages at the tenth second were measured and plotted with respect to the current value. Approximate straight lines were determined by applying the least squares method to the plots. The values of the slopes of the approximate straight lines were defined as the initial internal resistance and the internal resistance after the cycle test.

<Evaluation of Increase in Internal Resistance>

The increase rate of the internal resistance after the cycle test was determined by the following equation.

Increase rate (%) of low-temperature internal resistance after cycle test = (internal resistance after cycle test/initial internal resistance) × 100

A smaller value thereof means a higher effect of suppressing an increase in the internal resistance.

<Measurement of Gas Generation Amount>

The amount of gas generated was evaluated by estimating the increase in the cell volume of the nonaqueous electrolyte solution battery before and after the cycle test at 60°C by a buoyancy method using silicone oil at an ambient temperature of 25°C. A smaller value thereof means a higher effect of suppressing gas.

[Table 8]

Table 5

| Example | Electrolyte Solution No. | Battery Characteristics (Relative Values) | | |
|---|---|---|---|---|
| | | Capacity Retention Rate after Cycle Test | Increase Rate of Low-Temperature Internal Resistance after Cycle Test | Gas Generation Amount |
| Example 1-3e | 1-4 | 101 | 98 | 103 |
| Example 1-11e | 1-17 | 104 | 99 | 134 |
| Example 1-15e | 1-32 | 100 | 98 | 106 |
| Example 1-16e | 1-35 | 103 | 97 | 139 |
| Example 2-3e | 2-4 | 101 | 101 | 98 |
| Example 2-12e | 2-18 | 103 | 99 | 130 |
| Example 3-3e | 3-4 | 100 | 99 | 97 |
| Example 3-12e | 3-18 | 103 | 97 | 123 |
| Comparative Example 0-1e | 0-1 | 100 | 100 | 100 |
| Comparative Example 0-2e | 0-2 | 103 | 99 | 131 |
| Reference Example 0-1e | 0-7 | 95 | 101 | 118 |
| Reference Example 0-2e | 0-8 | 97 | 118 | 146 |
| Reference Example 0-3e | 0-9 | 84 | 141 | 163 |
| Comparative Example 0-7e | 0-10 | 99 | 98 | 104 |
| Comparative Example 0-8e | 0-11 | 102 | 97 | 136 |
| Reference Example 0-4e | 0-12 | 94 | 99 | 123 |

Here, the capacity retention rates after the cycle test, the increase rates of the low-temperature internal resistance after the cycle test, and the amounts of gas generated in Table 5 respectively indicate the relative values, where the values of Comparative Example 0-1e are set to 100.

As compared with Comparative Example 0-1e using the electrolyte solution No. 0-1, which contained (III) and (IV), Reference Examples 0-1e to 0-3e using the electrolyte solutions Nos. 0-7 to 0-9, in which one of or neither of the (III) salt and the (IV) was added to the nonaqueous electrolyte solution, were inferior in all the battery characteristics to Comparative Example 0-1e. This result shows that a nonaqueous electrolyte solution containing (III) and (IV) has excellent battery performance.

The same applies to Comparative Example 0-7e using the electrolyte solution No. 0-10, in which the type of (III) was changed (comparison between Comparative Example 0-7e and Reference Examples 0-2e to 0-4e).

On the other hand, in each of the Examples in Table 5 using the nonaqueous electrolyte solutions obtained by adding (V) to the electrolyte solution No. 0-1 or 0-2, no adverse effect on the battery performance was observed. This result shows that (V) hardly adversely affects the battery performance and can improve the stability of the nonaqueous electrolyte solution itself.

INDUSTRIAL APPLICABILITY

According to the present disclosure, a nonaqueous electrolyte solution capable of exhibiting excellent battery performance when used for a nonaqueous electrolyte solution battery and capable of suppressing coloration when stored for a long period of time at room temperature (25°C) and a nonaqueous electrolyte solution battery using the nonaqueous electrolyte solution can be provided.

Although the present disclosure has been explained in detail and referring to specific embodiments, it will be apparent to a person skilled in the art that various changes and modifications can be made without departing from the spirit and the scope of the present disclosure.

The present application is based on a Japanese Patent Application (No. 2023-140511) filed on August 30, 2023 and a Japanese Patent Application (No. 2024-028755) filed on February 28, 2024, the contents of which are incorporated herein by reference.

## Claims

**1.** A nonaqueous electrolyte solution, comprising:

(I) a solute;
(II) a nonaqueous organic solvent;
(III) a compound represented by the following general formula (1);
(IV) a compound represented by the following general formula (4); and
(V) at least one compound selected from the group consisting of a nitrate salt, a compound represented by the following general formula (2), and a compound represented by the following general formula (3);
wherein (V)/{(III)+(IV)}, which is a mass ratio of an amount of the (V) to a total amount of the (III) and the (IV), is 0.0040 or more:

[Chem. 1]

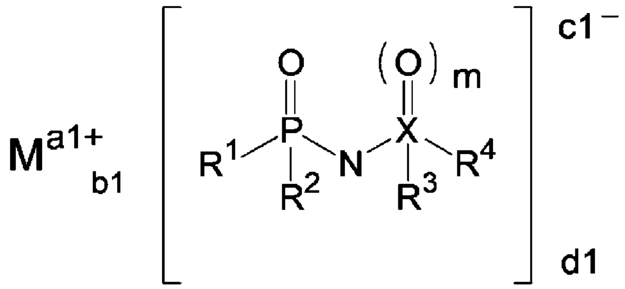

(1)

[wherein in the general formula (1), $M^{a1+}$ is an alkali metal cation, an alkaline earth metal cation, or an onium cation, a1 represents an integer equal to a valence of a corresponding cation,
a1 to d1 each represent an integer of 1 or 2 and satisfy a1 × b1 = c1 × d1,
X is a sulfur atom or a phosphorus atom, wherein when X is a sulfur atom, m is 2, and $R^4$ does not exist, and when X is a phosphorus atom, m is 1, and
$R^1$ to $R^4$ are each independently a fluorine atom, an oxygen atom, or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and the organic group may contain a fluorine atom, an oxygen atom, and/or an unsaturated bond]

[Chem. 2]

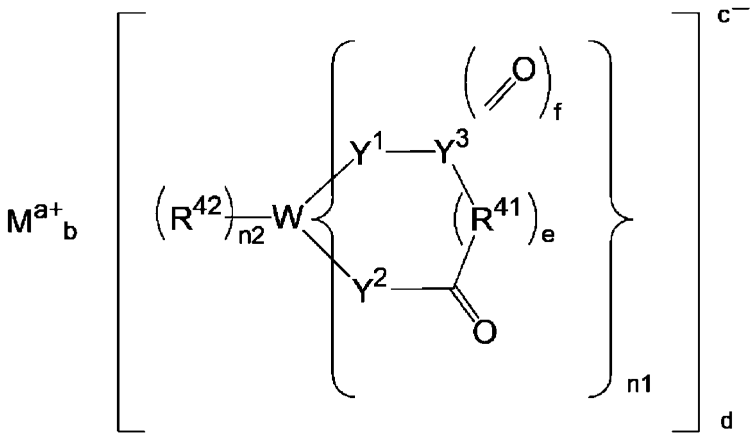

(4)

[wherein in the general formula (4), W represents a boron atom, a phosphorus atom, or a silicon atom,
n 1 is 1 or 2,
n2 is 2 or 4,
e is 0 or 1, wherein when e is 0, $R^{41}$ does not exist, and $Y^3$ and the carbonyl group described on the adjacent sides of $R^{41}$ are directly bonded,
$R^{41}$ represents an alkylene group having 1 to 10 carbon atoms, a halogenated alkylene group having 1 to 10 carbon atoms, an alkenylene group having 2 to 10 carbon atoms, a halogenated alkenylene group having 2 to 10 carbon atoms, an arylene group having 6 to 20 carbon atoms, or a halogenated arylene group having 6 to 20 carbon atoms (wherein the groups may contain a heteroatom in the structures thereof, and when n1 is 2 or more, n1 $R^{41}$'s may be bonded to each other),
$R^{42}$ represents a halogen atom,
$Y^1$ and $Y^2$ each independently represent an oxygen atom or a sulfur atom,
$Y^3$ represents a carbon atom or a sulfur atom,
f is 1 when $Y^3$ is a carbon atom, f is 1 or 2 when $Y^3$ is a sulfur atom,
$M^{a+}$ represents an alkali metal cation, an alkaline earth metal cation, or an onium cation, a represents a valence of a corresponding cation, and
a to d are 1 or 2 and satisfy a $\times$ b = c $\times$ d]

[Chem. 3]

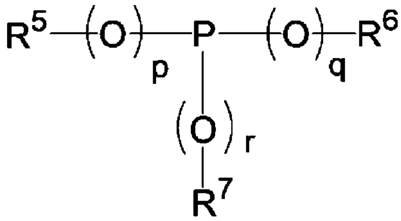

(2)

[wherein in the general formula (2), p, q, and r each independently represent 0 or 1, and
$R^5$ to $R^7$ are each independently a fluorine atom or a hydrocarbon group having 1 to 20 carbon atoms which may be partially or entirely substituted with fluorine, and $R^5$ and $R^6$, $R^5$ and $R^7$, or $R^6$ and $R^7$ may be bonded to each other to form a ring structure]

[Chem. 4]

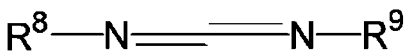

(3)

[wherein in the general formula (3), $R^8$ and $R^9$ are each independently a hydrocarbon group having 1 to 20 carbon atoms.]

**2.** The nonaqueous electrolyte solution according to claim 1, wherein the (V)/{(III)+(IV)} is 0.0100 to 1.5000.

**3.** The nonaqueous electrolyte solution according to claim 1, wherein at least one of $R^1$ to $R^4$ in the general formula (1) is

a fluorine atom.

4. The nonaqueous electrolyte solution according to claim 1, wherein the compound represented by the general formula (1) is a bis(difluorophosphoryl)imide salt or a (fluorosulfonyl)(difluorophosphoryl)imide salt.

5. The nonaqueous electrolyte solution according to claim 1, wherein the compound represented by the general formula (4) is an oxalato salt compound.

6. The nonaqueous electrolyte solution according to claim 1, wherein q, r, and s in the general formula (2) are all 1, and all of $R^5$ to $R^7$ are the same hydrocarbon group having 1 to 20 carbon atoms which may be partially or entirely substituted with fluorine.

7. The nonaqueous electrolyte solution according to claim 1, wherein the atoms bonded to the nitrogen atoms as $R^8$ and $R^9$ in the general formula (3) are secondary carbon atoms.

8. The nonaqueous electrolyte solution according to claim 1, wherein the compound represented by the general formula (3) is at least one selected from the group consisting of N,N'-diisopropylcarbodiimide and N,N'-dicyclohexylcarbodiimide.

9. The nonaqueous electrolyte solution according to claim 1, wherein the (V) contains the nitrate salt, and a content of the nitrate salt with respect to a total amount of the nonaqueous electrolyte solution is 1% by mass or less.

10. The nonaqueous electrolyte solution according to claim 1, wherein the nonaqueous electrolyte solution contains fluoroethylene carbonate.

11. The nonaqueous electrolyte solution according to claim 1, wherein the (I) is at least one selected from the group consisting of $LiPF_6$, $LiBF_4$, $LiSbF_6$, $LiAsF_6$, $LiClO_4$, $LiN(FSO_2)_2$, $LiAlO_2$, $LiAlCl_4$, LiCl, and LiI.

12. The nonaqueous electrolyte solution according to claim 1, wherein the (I) is at least one selected from the group consisting of $NaPF_6$, $NaBF_4$, $NaSbF_6$, $NaAsF_6$, $NaClO_4$, $NaN(FSO_2)_2$, $NaAlO_2$, $NaAlCl_4$, NaCl, and NaI.

13. The nonaqueous electrolyte solution according to claim 1, wherein the (II) contains at least one selected from the group consisting of a cyclic ester, an acyclic ester, a cyclic ether, an acyclic ether, a sulfone compound, a sulfoxide compound, and an ionic liquid.

14. The nonaqueous electrolyte solution according to claim 13, wherein the cyclic ester contains a cyclic carbonate.

15. The nonaqueous electrolyte solution according to claim 14, wherein the cyclic carbonate contains at least one selected from the group consisting of ethylene carbonate and propylene carbonate.

16. The nonaqueous electrolyte solution according to claim 13, wherein the acyclic ester contains an acyclic carbonate.

17. The nonaqueous electrolyte solution according to claim 16, wherein the acyclic carbonate contains at least one selected from the group consisting of ethyl methyl carbonate, dimethyl carbonate, diethyl carbonate, and methyl propyl carbonate.

18. The nonaqueous electrolyte solution according to claim 1, further comprising at least one selected from the group consisting of vinylene carbonate, a difluorophosphate salt, a fluorosulfonate salt, 1,3-propenesultone, 1,3-propanesultone, 1,6-diisocyanatohexane, ethynylethylene carbonate, trans-difluoroethylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, methanesulfonic anhydride, methanesulfonyl fluoride, 1,4-dioxane-2,6-dione, tripropargyl phosphate, tris(trimethylsilyl)borate, (ethoxy)pentafluorocyclotriphosphazene, tetrafluoro(picolinato)phosphate, 1,3-dimethyl-1,3-divinyl-1,3-di(1,1,1,3,3,3-hexafluoroisopropyl)disiloxane, N,N'-carbonylbis(N-methylsulfamoylfluoride), tetravinylsilane, trivinylmethylsilane, t-butylbenzene, t-amylbenzene, fluorobenzene, and cyclohexylbenzene.

19. A nonaqueous electrolyte solution battery, at least comprising:

a positive electrode;

a negative electrode;
a separator; and
the nonaqueous electrolyte solution according to any one of claims 1 to 18.

**INTERNATIONAL SEARCH REPORT**

International application No.
**PCT/JP2024/030303**

**A. CLASSIFICATION OF SUBJECT MATTER**

***H01M 10/0567***(2010.01)i; ***H01M 10/052***(2010.01)i; ***H01M 10/054***(2010.01)i; ***H01M 10/0568***(2010.01)i; ***H01M 10/0569***(2010.01)i
FI: H01M10/0567; H01M10/0568; H01M10/0569; H01M10/052; H01M10/054

According to International Patent Classification (IPC) or to both national classification and IPC

**B. FIELDS SEARCHED**

Minimum documentation searched (classification system followed by classification symbols)

H01M10/0567; H01M10/052; H01M10/054; H01M10/0568; H01M10/0569

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2018-037388 A (CENTRAL GLASS CO., LTD.) 08 March 2018 (2018-03-08) | 1-19 |
| A | WO 2018/190304 A1 (CENTRAL GLASS CO., LTD.) 18 October 2018 (2018-10-18) | 1-19 |
| A | WO 2022/158399 A1 (CENTRAL GLASS CO., LTD.) 28 July 2022 (2022-07-28) | 1-19 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/030303**

| Patent document cited in search report | Publication date (day/month/year) | Patent family member(s) | Publication date (day/month/year) |
|---|---|---|---|
| JP 2018-037388 A | 08 March 2018 | CN 109417200 A | |
| | | KR 10-2019-0025006 A | |
| WO 2018/190304 A1 | 18 October 2018 | US 2020/0115401 A1 | |
| | | EP 3608328 A1 | |
| | | CN 110520431 A | |
| | | KR 10-2019-0132509 A | |
| WO 2022/158399 A1 | 28 July 2022 | US 2024/0105992 A1 | |
| | | EP 4283739 A1 | |
| | | CN 116711119 A | |
| | | KR 10-2023-0137315 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013051122 A
- WO 2017111143 A
- JP 2016523429 A
- CN 1601799 A
- JP H10294129 A
- JP 2023140511 A
- JP 2024028755 A